# EUROPEAN PATENT APPLICATION

(11) **EP 2 048 583 A2**
(43) Date of publication of application: **15.04.2009**
(21) Application number: 08252686.4
(22) Date of filing: 13.08.2008
(51) Int. Cl.: G06F 13/42

(54) **Data processing system**

(30) Priority: 31.08.2007 JP 2007225030
(71) Applicant: Renesas Technology Corp., Tokyo 100-0004 (JP)
(72) Inventor: Nonomura, Itaru, Tokyo 100-8220 (JP)
(74) Representative: Calderbank, Thomas Roger

(57) **Abstract**

A data processing system enabling an outstanding-based variable flow control is provided. The data processing system includes a first semiconductor integrated circuit possessing an initiator and a second semiconductor integrated circuit possessing a target. The initiator transmits a request packet to the target, the target transmits a response packet to the initiator, and split transaction interface is practiced. The initiator includes an outstanding number counting circuit for counting an outstanding number defined by the difference in number between the request packets transmitted and the response packets received. The request packet transmission number is controlled so that the count value of the outstanding number counting circuit may not exceed the outstanding number to which the target can respond. The outstanding number is dynamically changeable to a suitable number so that the maximum latency from the issue of the request packet to the reception of the response packet is suppressed.

## Description

The Present application claims priority from Japanese patent application JP 2007-225030 filed on August 31, 2007, the content of which is hereby incorporated by reference into this application.

The present invention relates to split transaction interface control in a data processing system in which plural semiconductor integrated circuits are coupled by a split transaction interface.

Performance requirement and function requirement to a system-on-chip (SoC) are increasing every year, and the tendency is likely to continue. In connection with the tendency, the circuit quantity to be integrated on a SoC increases and miniaturization technique further advances to mount the increasing circuits on a chip. These tendencies raise the development costs of the SoC, such as a mask cost, through the synergistic effect. Consequently, a mass production quantity necessary for a SoC vendor to make a profit, i.e., a break-even level, is abruptly going up in recent years. This tendency is likely to continue. Even today, if the SoC is thoroughly developed using a state-of-the-art process, there is a case which does not reach a break-even level, but it is anticipated that the ratio of such a case increases more in the future.

In the future, therefore, in order to secure profitability of a state-of-the-art process product, and to respond individual customer's requirement at the same time, the ASSP-ASIC isolation architecture is likely to spread, in which the function common to several product classes is developed as ASSP by a state-of-the-art process, and the part of customer's requirement is developed as ASIC by an inexpensive process. ASSP (Application Specific Standard Product) means a general-purpose LSI in which the function is specialized for a specific field. ASIC (Application Specific Integrated Circuit) means a dedicated LSI designed and manufactured for a certain specific application, and it is called a custom IC etc.

In an ASSP-ASIC isolation architecture, the significance of inter-chip transfer is high. The access performance from ASSP with a main CPU to ASIC with circumference functions is especially important. In the past, as an inter-chip interface, many parallel buses which operate at about tens of MHz, such as PCI (Peripheral Components Interconnect), were employed. However, employing parallel buses are often accompanied by some issues such as increased chip cost due to many terminals, and increased substrate cost due to the fact that the substrate to mount the chip is required to provide many wiring.

Therefore, a serial interface which can operate at a raised operating frequency of hundreds of MHz or more and with a reduced terminal number is necessary as an inter-chip interface. In the inter-chip interface which operates at such a high frequency, the implementation of the flow control by a handshake signal, which is employed by the parallel interface operating at tens of MHz, is difficult.

Document 1 (JP-2001-202327 A) discloses an interface protocol, in which, in order to enable a high frequency operation of a bus, a source LSI possesses a counter which loads, at the time of initialization, the value which indicates how many commands a receiving LSI can process at the same time or how many data the receiving LSI can receive at the same time, and the source LSI decrements the counter when a command or data is issued, increments the counter when a ready signal is received, and inhibits the issue of a command or data when the counter indicates zero. According to the interface protocol, the source LSI can issue a command and data to the receiving LSI, without confirming a busy signal from the receiving LSI. Since the source LSI of a command or data can manage the state of a command buffer or a data buffer of the receiving LSI, the command or data can be issued efficiently, independent of handshake, even when the bus operates at high speed.

In the technology disclosed by Document 2 (JP-05-336194 A), based on coincidence result between the maximum outstanding number from a counting means 12 and the number of information frames sent, a transmission means 11 transmits information frames continuously without performing a response confirmation from a response means 21, by setting "1" to a poll bit of the information frame to be sent next. The transmission means 11 receives a response frame with a final bit of "1" from the response means, and transmits continuously again the information frame, after setting "0" to the poll bit, without performing the response confirmation of a data receiving device. Document 2 claims that the continuous transmission of information frame can be performed without response confirmation and the response confirmation can be replied immediately, resulting in improvement of data throughput.

According to the technology disclosed by Document 1 and Document 2, a flow control can be realized without employing a handshake signal line. Therefore, signal transfer between an initiator circuit and a target circuit can be accelerated. Accordingly, it is understood that the outstanding-based flow control is useful for the serial interface, instead of the handshake signal-based flow control in the related art. The present inventor has further considered the outstanding-based flow control which is effective in reduction of latency in receiving a response after issuing a request, and in low power consumption. The present inventor has considered changeability of a flow control with respect to the outstanding-based flow control, avoidance of a possibility that an interruption processing would be delayed due to the flow control, improvement in the secrecy of an interface signal, and others. Finally the present invention has been perfected.

In view of the above circumstances, it is desirable to realize a outstanding-based flow control which can contribute to reduction of latency and a low power consumption.

It is also desirable to realize the data processing system which allows the outstanding-based variable flow control.

It is further desirable to avoid a possibility that an interruption processing would be delayed due to the variable flow control on communication of the interruption information between chips. The above and other desirable issues and the new features of the present invention will become clear from the description of the present specification and the accompanying drawing to be given in the following.

The following briefly explains an outline of typical one of the inventions disclosed by the present application.
(1) A data processing system includes: a first semiconductor integrated circuit possessing an initiator; a second semiconductor integrated circuit possessing a target; and an interface signal line coupling the initiator with the target. The initiator transmits a request packet to the target, and the target transmits a response packet to the initiator, accordingly a packet-based split transaction interface is executed. In the data processing system, the initiator includes an outstanding number counting circuit to count an outstanding number defined as a difference in number between the transmitted request packet and the received response packet, and the initiator controls the number of the transmitted request packet so as to make the counted value of the outstanding number counting circuit not exceed an outstanding number that can be responded by the target. According to the control, it becomes possible to change the outstanding number to a suitable number dynamically so that the maximum latency in receiving a response packet after issuing a request packet may be suppressed.
(2) In item (1), when the target possesses an outstanding register to hold the outstanding number that can be responded, the initiator reads out a value held by the outstanding register and controls the number of the transmitted request packet so as to make the read-out value not exceed the counted value of the outstanding number counting circuit. Accordingly, the number of transmitted request packet becomes controllable, according to the value set to the outstanding register.
(3) In item (1), when the target possesses an outstanding register to hold the outstanding number that can be responded, the initiator sets an outstanding number to the outstanding register and controls the number of the transmitted request packet so as to make the outstanding number set not exceed the counted value of the outstanding number counting circuit. Accordingly, the initiator can control the number of transmitted request packet, by setting a necessary value to the outstanding register.
(4) In item (1), the initiator transmits an interruption packet to the target via a transfer path used in transmitting the request packet, and the target generates an interrupt signal based on the interruption packet received. Accordingly, it is also possible to variably control the latency of the interrupt responsibility to the interruption request issued from the initiator to the target.
(5) In item (1), the target transmits an interruption packet to the initiator via a packet transfer path used in transmitting the response packet, and the initiator generates an interrupt signal based on the interruption packet received. Accordingly, it is also possible to variably control the latency of the interrupt responsibility to the interruption request issued from the target to the initiator.
(6) In item (2) or (3), the target possesses parallel buffers to hold data of packets as many as a maximum outstanding number held in the outstanding register, and the target cuts off electric power supply to a buffer unneeded in holding the data of packets as many as the outstanding number held in the outstanding register. This structure can contribute to the low power consumption of the target which responds to the request packet.
(7) In item 2 or 3, the target possesses plural buffers to hold data of packets as many as a maximum outstanding number held in the outstanding register, and the target cuts off clock supply to a buffer unneeded in holding the data of packets as many as the outstanding number held in the outstanding register. This structure can contribute to the low power consumption of the target which responds to the request packet.
(8) In item (1), the initiator supplies the target with a first cryptographic key to decrypt a request packet and a second cryptographic key to encrypt a response packet, and the target decrypts the received request packet with the first cryptographic key and encrypts the response packet to transmit with the second cryptographic key. Accordingly, the secrecy of the interface signal between the initiator and the target can be improved.
(9) A data processing system includes: a first semiconductor integrated circuit possessing an initiator; a second semiconductor integrated circuit possessing a target; and an interface signal line coupling the initiator with the target. The initiator transmits a request packet to the target, and the target transmits a response packet to the initiator, accordingly a packet-based split transaction interface is executed. In the data processing system, the initiator includes a read outstanding number counting circuit to count a read outstanding number defined as a difference in number between a request packet transmitted in read access and a response packet received in read access, and the initiator controls the number of the request packet transmitted in read access so as to make the counted value of the read outstanding number counting circuit not exceed an outstanding number that can be responded by the target. According to the control, it becomes possible to change the outstanding number to a suitable number dynamically so that the maximum latency in receiving a response packet after issuing a request packet in read access may be suppressed.
(10) A data processing system includes: a first semiconductor integrated circuit possessing an initiator; a second semiconductor integrated circuit possessing a target; and an interface signal line coupling the initiator with the target. The initiator transmits a request packet to the target, and the target transmits a response packet to the initiator, accordingly a packet-based split transaction interface is executed. In the data processing system, the initiator includes a write outstanding number counting circuit to count a write outstanding number defined as a difference in number between a request packet transmitted in write access and a response packet received in write access, and the initiator controls the number of the request packet transmitted in write access so as to make the counted value of the write outstanding number counting circuit not exceed a write outstanding number that can be responded by the target. According to the control, it becomes possible to change the outstanding number to a suitable number dynamically so that the maximum latency in receiving a response packet after issuing a request packet in write access may be suppressed.
(11) A data processing system includes: a first semiconductor integrated circuit possessing an initiator; a second semiconductor integrated circuit possessing a target; and an interface signal line coupling the initiator with the target. The initiator transmits a request packet to the target, and the target transmits a response packet to the initiator, accordingly a packet-based split transaction interface is executed. In the data processing system, the initiator transmits to the target a request packet and a request strobe signal indicative of transfer timing of the request packet and the target transmits to the initiator a response packet and a response strobe signal indicative of transfer timing of the response packet. Accordingly, it is possible to variably control the timing of the flow control using the strobe signal.
(12) A data processing system includes: a first semiconductor integrated circuit possessing an initiator; a second semiconductor integrated circuit possessing a target; and an interface signal line coupling the initiator with the target. The initiator transmits a request packet to the target, and the target transmits a response packet to the initiator, accordingly a packet-based split transaction interface is executed. In the data processing system, the target includes a request lane number register to hold a number of signal lines used in receiving the request packet, and a response lane number register to hold a number of signal lines used in transmitting the response packet, and the initiator sets respectively a value indicative of a number of signal lines used in transmitting the request packet to the request lane number register, and a value indicative of a number of signal lines used in receiving the response packet to the response lane number register. Accordingly, it is possible to variably control the signal line number employed for the flow control according to the setting value of the lane number registers.
(13) In item (12), the initiator includes a request counting circuit to count a number of bits of the request packet, and a response counting circuit to count a number of bits of the response packet, and the initiator sets the number of signal lines used in transmitting the request packet and the number of signal lines used in receiving the response packet, based on the count result of the request counting circuit and the count result of the response counting circuit.
(14) A data processing system includes: a first semiconductor integrated circuit; and a second semiconductor integrated circuit, each of the first semiconductor integrated circuit and the second semiconductor integrated circuit possesses an initiator and a target to perform communication using a split transaction interface. The first semiconductor integrated circuit and the second semiconductor integrated circuit are coupled with a signal line for communication, and the first semiconductor integrated circuit changes the number of the signal line after stopping the initiator of the second semiconductor integrated circuit. Accordingly, it is possible to change the number of signal lines by suppressing the situation where the target of the first semiconductor integrated circuit becomes impossible to receive a request packet normally.
(15) A data processing system includes: a first semiconductor integrated circuit; and a second semiconductor integrated circuit, each of the first semiconductor integrated circuit and the second semiconductor integrated circuit possesses an initiator and a target to perform communication of encrypted information using a split transaction interface. The first semiconductor integrated circuit and the second semiconductor integrated circuit are coupled with a signal line for communication, and the first semiconductor integrated circuit changes a cryptographic key to be used in encryption after stopping the initiator of the second semiconductor integrated circuit. Accordingly, it becomes possible to change the cryptographic key, by suppressing the situation where the target of the first semiconductor integrated circuit becomes impossible to decrypt the request packet normally.
(16) A data processing system includes: a first semiconductor integrated circuit; and a second semiconductor integrated circuit, each of the first semiconductor integrated circuit and the second semiconductor integrated circuit possesses an initiator and a target operable to perform communication using a split transaction interface. The first semiconductor integrated circuit and the second semiconductor integrated circuit are coupled with a signal line for communication, and the first semiconductor integrated circuit sets an outstanding upper limit number of the initiator of the second semiconductor integrated circuit, based on an upper limit of the outstanding number of the target included in the first semiconductor integrated circuit. Accordingly, it becomes possible to change the outstanding number, by suppressing the situation where the target of the first semiconductor integrated circuit becomes impossible to respond normally to the request packet from the initiator of the second semiconductor integrated circuit.

The effect obtained by the typical inventions disclosed in the present application is explained briefly as follows.

It is possible to realize the outstanding-based flow control which can contribute to the suppression of latency and the reduction of power consumption.

It is possible to realize a data processing system which enables the outstanding-based variable flow control.

On communication of the interruption information between chips, it is possible to avoid a possibility that the interruption processing will be delayed due to the variable flow control.

### In the drawings:

FIG. 1 is a block diagram illustrating an integrated circuit-A 101 and an integrated circuit-B 109 according to a first embodiment of the present invention;
FIG. 2 is an arrangement chart illustrating a signal line group-AB 107 and a signal line group-BA 108 according to the first embodiment of the present invention;
FIG. 3 is a timing chart illustrating a split protocol according to the first embodiment of the present invention;
FIG. 4 is a format chart illustrating a serial request packet according to the first embodiment of the present invention;
FIG. 5 is a relationship chart illustrating a lasz field, lower-order bits of an accessing target address, and a transfer size, according to the first embodiment of the present invention;
FIG. 6 is a format chart illustrating a serial response packet according to the first embodiment of the present invention;
FIG. 7 is a chart illustrating relationship among a value of a dss field, access success/access failure, and read data amount, according to the first embodiment of the present invention;
FIG. 8 is a format chart illustrating a serial control packet according to the first embodiment of the present invention;
FIG. 9 is a timing chart illustrating the situation of transfer of a serial request packet and a serial control packet in the serial interface according to the first embodiment of the present invention;
FIG. 10 is a timing chart illustrating the situation of transfer of a serial response packet and a serial control packet in the serial interface according to the first embodiment of the present invention;
FIG. 11 is a block diagram illustrating the structure of an initiator-A 105 according to the first embodiment of the present invention;
FIG. 12 is an explanatory chart illustrating a register group included in a register 1107 according to the first embodiment of the present invention;
FIG. 13 is a block diagram illustrating the structure of a target-B 112 according to the first embodiment of the present invention;
FIG. 14 is an explanatory chart illustrating a register group included in a register-B 1304 according to the first embodiment of the present invention;
FIG. 15 is a flow chart illustrating initialization processing of the serial interface according to the first embodiment of the present invention;
FIG. 16 is an explanatory chart illustrating the value of each register included in a register-A 1107 and a register-B 1304 at the time of the completion of initialization according to the first embodiment of the present invention;
FIG. 17 is a flow chart illustrating a lane number change sequence according to the first embodiment of the present invention;
FIG. 18 is a flow chart illustrating another lane number change sequence according to the first embodiment of the present invention;
FIG. 19 is a numerical table for setting up a request lane number and a response lane number according to the first embodiment of the present invention;
FIG. 20 is a flow chart illustrating a processing of a cryptographic key number change sequence according to the first embodiment of the present invention;
FIG. 21 is a block diagram illustrating an integrated circuit-A 2101 and an integrated circuit-B 2111 according to a second embodiment of the present invention;
FIG. 22 is a block diagram illustrating the structure of a controller-A 2106 according to the second embodiment of the present invention;
FIG. 23 is an explanatory chart illustrating a register group included in a register-A 2210 according to the second embodiment of the present invention;
FIG. 24 is a block diagram illustrating the structure of a device-B 2116 according to the second embodiment of the present invention;
FIG. 25 is an explanatory chart illustrating a register group included in a register-B 2406 according to the second embodiment of the present invention;
FIG. 26 is a flow chart illustrating the initialization processing of a serial interface according to the second embodiment of the present invention;
FIG. 27 is an explanatory chart illustrating the value of each register included in a register-A 2210 according to the second embodiment of the present invention;
FIG. 28 is an explanatory chart illustrating the value of each register included in a register-B 2406 according to the second embodiment of the present invention; and
FIG. 29 is a flow chart illustrating a processing of the lane number change sequence according to the second embodiment of the present invention.

### «First Embodiment»

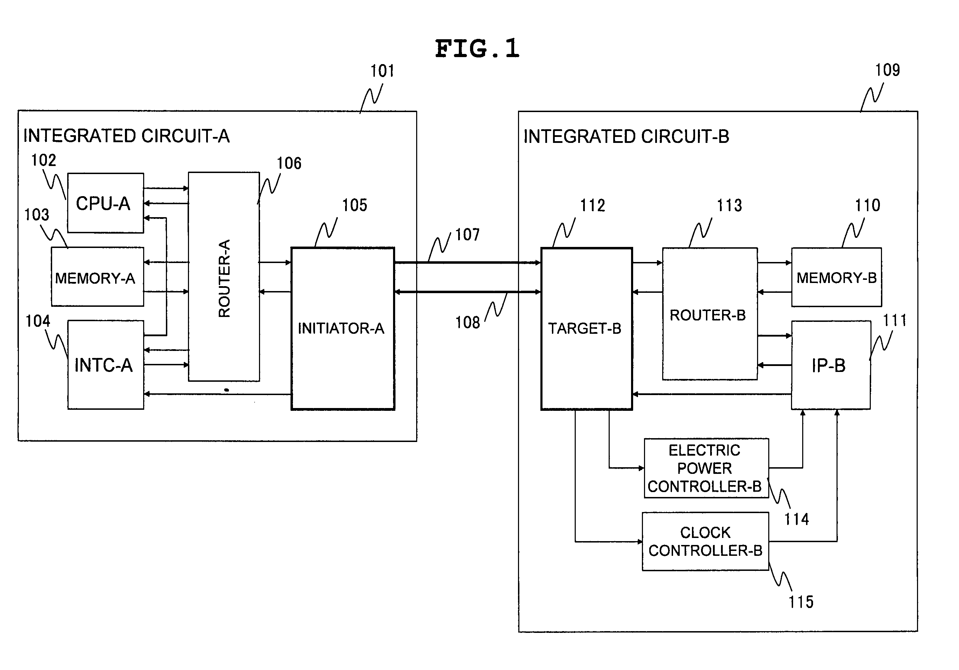

FIG. 1 illustrates an integrated circuit-A and an integrated circuit-B according to a first embodiment of the present invention. The integrated circuit-A 101 and the integrated circuit-B 109 illustrated in FIG. 1 are formed on a semiconductor substrate such as a single crystal silicon, employing semiconductor integrated circuit technology which forms a publicly known CMOS (complementary MOS transistor), a bipolar transistor, etc. The present embodiment explains the read access and the write access between the integrated circuit-A 101 and the integrated circuit-B 109 and the notice of interruption from the integrated circuit-B 109 to the integrated circuit-A 101.

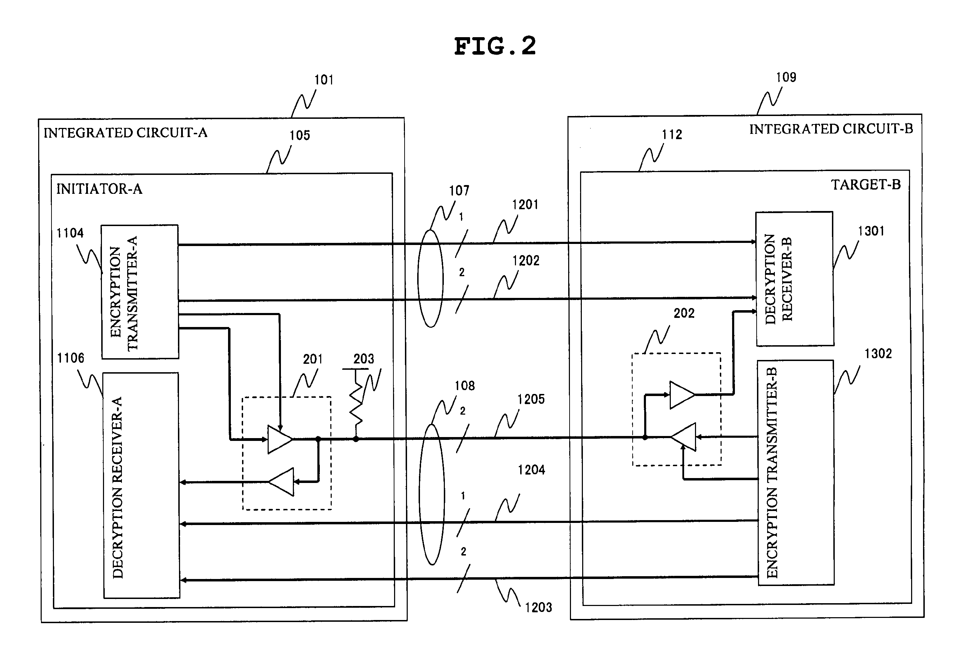

First, a signal line group-AB 107 and a signal line group-BA 108 are explained with reference to FIG. 2.

FIG. 2 is an arrangement chart illustrating the signal line group-AB 107 and signal line group-BA 108. Three-state buffers 201 and 202 switch a signal transmission direction. A pull-up resistor 203 fixes the potential of an information signal line group included in the signal line group-AB 107 or the signal line group-BA 108 to a HIGH level, while the information signal line group is driven by neither the integrated circuit-A 101 nor the integrated circuit-B 109.

The signal line group-AB 107 transmits information from the integrated circuit-A 101 to the integrated circuit-B 109, and the signal line group-BA 108 transmits information from the integrated circuit-B 109 to the integrated circuit-A 101. The signal line group-AB 107 and the signal line group-BA 108 are formed with a bonding wire and a bump and an interposer within SiP (System in Package), a wiring on a substrate, etc.

The signal line group-AB 107 includes a line of strobe signal 1201, two lines of information signal group-AB 1202, and two lines of information signal group 1205. The signal line group-AB 107 is driven by an encryption transmitter-A 1104 included in an initiator-A 105 of the integrated circuit-A 101. In the following description of the present embodiment, the information signal group-AB 1202 and the information signal group 1205 are called a request lane, and the number of the signal line used for transmission of a serial packet among the signal lines of the information signal group-AB 1202 and the information signal group 1205 is called a request lane number.

The signal line group-BA 108 includes a line of strobe signal 1203, two lines of information signal group-BA 1204, and two lines of information signal groups 1205. The signal line group-BA 108 is driven by an encryption transmitter-B 1302 included in a target-B 112 of the integrated circuit-B 109. In the following description of the present embodiment, the information signal group-BA 1204 and the information signal group 1205 are called a response lane, and the number of the signal line used for transmission among the information signal group-BA 1204 and the information signal group 1205 is called a response lane number.

The information signal group 1205 is driven by the three-state buffers 201 and 202 so that the transmission direction may be switched. When the transmission direction is from the integrated circuit-A 101 to the integrated circuit-B 109, the information signal group 1205 belongs to a request lane, and is included in the signal line group-AB 107. When the transmission direction is from the integrated circuit-B 109 to the integrated circuit-A 101, the information signal group1205 belongs to a response lane and is included in the signal line group-BA 108.

Next, modules included in the integrated circuit-A 101 is explained with reference to FIG. 1.

The integrated circuit-A 101 possesses, as the modules, CPU-A 102, a memory-A 103, INTC-A 104, an initiator-A 105, and a router-A 106. The signal line group-AB 107 and the signal line group-BA 108 are coupled to the integrated circuit-A 101. CPU-A 102 controls the integrated circuit-A 101 and the integrated circuit-B 109 by accessing the memory-A 103 via the router-A 106 and executing a program stored in the memory.

The split transaction interface protocol (split protocol) employed for access by the present invention is now explained.

Access within the integrated circuit-A 101 is performed with the use of the split protocol which is completed when a first module, which requests access, sends an access request and a second module, which has received the access request, sends an access response to the first module which has requested the access.

In the present specification, the first module which requests access is called an initiator and the second module (or circuit) which responds the access is called a target. One circuit may have a function of an initiator and a target. In the present specification, the difference of the number of access request and the number of access response is called outstanding number. When the outstanding number is "1", the initiator will not send another access request until the target sends back an access response to the access request which the initiator has sent. When the outstanding number is equal to or greater than "2", the initiator can send another access request, before receiving an access response to the access request sent, and the target can receive another access request, before sending an access response to the access request received.

When the upper limit of the outstanding number is large, many access requests and access responses can be processed within unit time, therefore, it is easy to increase transfer throughput. However, a large outstanding number means that many circuits are necessary in order to process many accesses at the same time, leading to increase in the circuit cost.

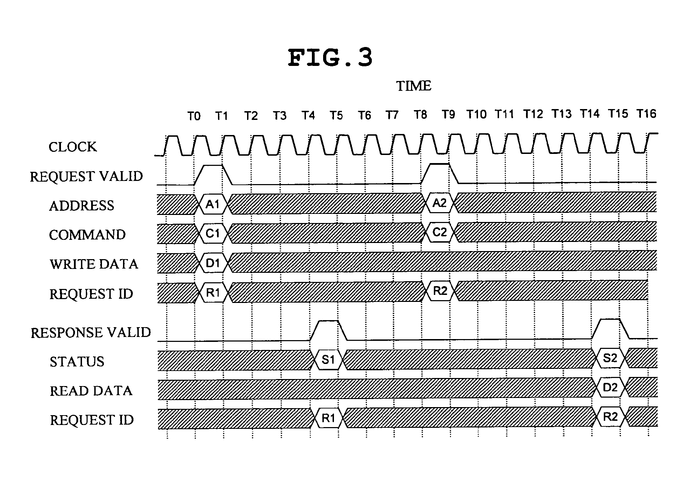

Next, access within the integrated circuit-A 101 is explained with reference to FIG. 3.

FIG. 3 is a timing chart illustrating a case where write access and read access are respectively performed once in the integrated circuit-A 101. In FIG. 3, time from T1 to T5 represents the write access. In the write access, the initiator outputs an address "A1", a command "C1", write data "D1", and a request ID "R1" which configure the contents of the access request, and shifts a request valid signal to a HIGH level, indicating that the access request is sent (time T1). A request ID is identification information which the initiator includes in the access request so that, when the target sends an access response to the initiator, the router-A 106 for relaying the access response can specify an initiator of the transmission destination.

The router-A 106 specifies a target of the transmission destination with the address, and resends, to the specified target, the address, the command, the write data, and the request ID which the initiator has sent. At this time, asserting the request valid signal, the router-A 106 notifies the target of the fact that the access request is sent.

In the following description of the present specification, an operation that a module which outputs a 1-bit control signal such as the request valid signal, shifts the control signal to a value indicating a significant state is expressed by "to assert", and an operation that the module shifts the control signal to a value indicating an insignificant state is expressed by "to deassert." A state that a 1-bit control signal has a value indicating a significant state is expressed as an "assertion state", and a state that a 1-bit control signal has a value indicating an insignificant state is expressed as a "deassertion state." Furthermore, in the present specification, the information which indicates the contents of an access request, such as an address, a command, write data, and a request ID, is called a request packet, and the information which indicates the contents of an access response, such as status, read data, and response valid, is called a response packet.

A request packet and a response packet which are transferred within the integrated circuit-A 101 are called a parallel request packet and a parallel response packet, respectively, in order to distinguish from a request packet and a response packet which are transferred between the integrated circuit-A 101 and the integrated circuit-B 109, as described below.

On the other hand, a request packet and a response packet which are transferred between the integrated circuit-A 101 and the integrated circuits-B 109 are called a serial request packet and a serial response packet, respectively.

Now the description returns to the explanation of access in the integrated circuit-A 101.

The target detects that the request valid is asserted at time T1, and takes in the address, the command, the write data, and the request ID. The target writes the write data "D1" in the address "A1." In the case of write access, the access response is 1-bit information which indicates whether the access is performed normally or not. At time T5 when the write access is completed, the target asserts the response valid signal which indicates the fact that the access response is sent, and outputs the status "S1" and the request ID "R1" at the same time. Since this access is the write access, a signal which indicates read data is invalid.

The router-A 106 specifies the initiator of the transmission destination of the access response in terms of the request ID, and resends, to the specified initiator, the status, the request ID, and the read data which the target has sent. At this time, by asserting the response valid signal, the router-A 106 notifies the initiator of the fact that the access response is sent.

Next, read access is explained. In FIG. 3, time from T9 to T15 represents the read access. In the read access, the initiator outputs an address "A2", a command "C2", and a request ID "R2" which are the contents of the access request, and shifts a request valid signal to a high-level, indicating that the access request is sent (time T9).

The target detects that the request valid is asserted at time T9, and takes in the address, the command, and the request ID. The target reads out the read data "D2" from the address "A2." In the case of read access, the access response is the read data and the status information described above. At time T15 when the read access completes, the target asserts the response valid signal which indicates that the access response is sent, and outputs the status "S2" and the request ID "R2" at the same time.

The router-A 106 specifies the initiator of the transmission destination of the access response by the request ID, and resends the status, the request ID, and the read data which the target has sent to the specified initiator. At this time, the router-A 106 asserts the response valid signal, notifying the initiator of the fact that the access response is sent.

Now the description returns to the explanation of the modules included in the integrated circuit-A 101.

The memory-A 103 receives a request packet from the router-A 106, performs a read access or a write access according to the contents of the request packet, and sends a response packet to the router-A 106. INTC-A 104 serves as an interruption controller which takes in interruption information from the initiator-A 105, and relays the interruption information to CPU-A 102. The initiator-A 105 serves as a bridge circuit which relays an access request and an access response between the router-A 106 and the integrated circuit-B 109. At the same time, the initiator-A 105 serves also as an interruption junction circuit which relays an interruption request from the integrated circuit-B 109 to INTC-A 104. The router-A 106 serves as a junction circuit for relaying a request packet and a response packet which are transmitted and received by CPU-A 102, the memory-A 103, INTC-A 104, and the initiator-A 105.

Next, modules included in the integrated circuit-B 109 are explained.

The integrated circuit-B 109 possesses a memory-B 110, IP-B 111, a target-B 112, a router-B 113, an electric power controller-B 114, and a clock controller-B 115. The signal line group-AB 107 and the signal line group-BA 108 are coupled to the integrated circuit-B 109. Access within the integrated circuit-B 109 is performed by the same split protocol as for the access within the integrated circuit-A 101. In the integrated circuit-B 109, the target-B 112 and IP-B 111 are initiators, and the memory-B 110 is a target.

The memory-B 110 receives a request packet from the router-B 113, performs a read access or a write access according to the contents of the request packet, and sends a response packet to the router-B 113.

IP-B 111 is a circuit called an IP (Intellectual Property) module which performs a predetermined processing by accessing the memory-B 110 via the router-B 113, writes the result obtained by the processing to the memory-B 110, and further notifies the target-B 112 of the completion of the processing by an interrupt signal.

The target-B 112 serves as a bridge circuit which receives a serial request packet from the integrated circuit-A 101 via the signal line group-AB 107, converts the serial request packet into a parallel request packet, and sends the parallel request packet to the router-B 113. The target-B 112 serves as a bridge circuit which receives a parallel response packet from the router-B 113, converts the parallel response packet into a serial response packet, and sends the serial response packet to the integrated circuit-A 101 via the signal line group-BA 108. The target-B 112 serves as an interruption junction circuit which takes in interruption information from IP-B 111 and sends the interruption information to the integrated circuit-A 101 via the signal line group-BA 108. The target-B 112 also serves as a control circuit which receives a serial request packet from the integrated circuit-A 101 via the signal line group-AB 107, generates an electric power request signal and a clock request signal based on the serial request packet, supplies the signals to the electric power controller-B 114 and the clock controller-B 115, respectively.

The router-B 113 serves as a junction circuit for relaying a parallel request packet and a parallel response packet which are transmitted and received by the memory-B 110, IP-B 111, and the target-B 112.

The electric power controller-B 114 is an electric power control circuit which supplies or cuts off the power to IP-B 111 based on the electric power control signal supplied from the target-B 112. The clock controller-B 115 is a clock control circuit which supplies or cuts off the clock to IP-B 111 based on the clock control signal supplied from the target-B 112.

Next, transfer processing between the integrated circuit-A 101 and the integrated circuit-B 109 is explained. In the following description of the present embodiment, the interface constituted by the signal line group-AB 107 and the signal line group-BA 108 between the integrated circuit-A 101 and the integrated circuit-B 109 is called a serial interface. Access which goes via the serial interface is performed in terms of the split protocol which is similar to the access in the integrated circuit-A 101. However, the request packet and the response packet transferred on the serial interface are a serial request packet and a serial response packet with the format which is different from the format of the parallel request packet and the parallel response packet described above. On the serial interface, a serial control packet including interruption information etc. is also transferred. In the following, the serial request packet, the serial response packet, and the serial control packet are collectively called a serial packet.

In the serial interface of the present invention, the serial request packet and the serial response packet are considered as the object of outstanding number calculation, but the serial control packet is not the object of outstanding number calculation.

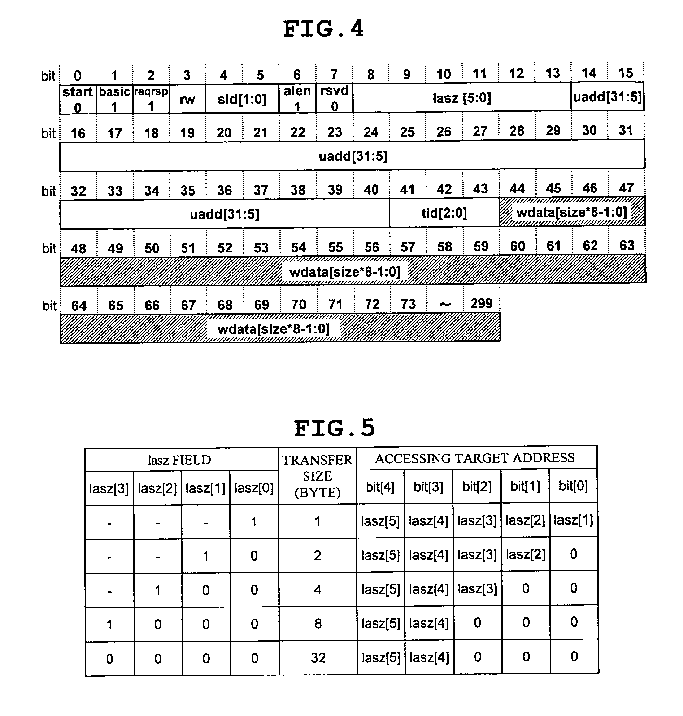

Next, the serial request packet and the serial response packet are explained with reference to FIG. 4.

FIG. 4 illustrates the format of the serial request packet. The serial request packet includes fields of start, basic, reqrsp, rw, sid, tid, alen, lasz, uadd, tid, and wdata. Each field is explained.

The start field is a 1-bit field which indicates the head position of the serial packet. The position where the start field is "1" is the head of the serial packet.

The basic field is a 1-bit field which indicates the kind of the serial packet. The packet whose basic field is "1" is a serial request packet or a serial response packet, and the packet whose basic field is "0" is a serial control packet.

The reqrsp field is a 1-bit field which indicates whether the serial packet is a request packet or a response packet. The packet whose reqrsp field is "1" is a request packet.

The rw field is a 1-bit field which indicates a read access or a write access. The serial request packet whose rw field is "1" is a serial request packet in read access, and the serial request packet whose rw field is "0" is a serial request packet in write access.

The sid field is a 2-bit field which indicates a stream ID. Reason for existence of the sid field and the handling of the sid field by the initiator and the target are explained. Generally, a series of accesses performed continuously possess a high locality of reference. When performing a series of accesses which possess the locality of reference, the address to be transferred for every access is only the lower-order bits (for example, from bit 11 to bit 0 of the address which indicates 4 K bytes), and it is sufficient to transfer the higher-order bits of the address only once first. However, when omitting a part of the address in this way, the address omitted needs to be complemented by the target. Since the multitask processing in which one processor performs parallel execution of plural pieces of processing by time sharing is common at the present, plural access groups which are composed of a series of accesses possessing locality of reference are performed in parallel frequently in an integrated circuit. Accordingly, in the serial interface of the present specification, the sid field is provided as a field for identifying the access group. The initiator sets the same value to the sid field of a series of serial request packet groups which possess a high locality of reference, and reduces the number of bits of a serial request packet by suppressing transfer of higher-order bits of the address, with the use of the alen field described later. Consequently, the latency and throughput of the serial interface are improved. The target stores the value of the sid field at the time of receiving the serial request packet, and performs the address complement based on the value of the sid field. The target also outputs the value of the sid field as the r_sid field (to be described later) when the target sends a corresponding serial response packet.

The alen field is a 1-bit field which indicates address length. When the alen field is "1", the address length is 32 bits, and when the alen field is "0", the address length is 12 bits. The lasz field is a 6-bit field which indicates the lower-order bits of address and a transfer size.

The relationship between the lasz field and the lower-order bits of an accessing target address and a transfer size are explained with reference to FIG. 5.

FIG. 5 is a relationship chart illustrating the lasz field, the lower-order bits of an accessing target address, and the transfer size.

When the value of the lowest bit of the lasz field is "1", the transfer size is 1 byte and bit 4 to bit 0 of the accessing target address correspond to bit 5 to bit 1 of the lasz field.

When the value of lowest 2 bits of the lasz field is "10", the transfer size is 2 bytes, bit 4 to bit 1 of the accessing target address correspond to bit 5 to bit 2 of the lasz field, and bit 0 of the accessing target address is "0."

When the value of lowest 3 bits of the lasz field is "100", the transfer size is 4 bytes, bit 4 to bit 2 of the accessing target address correspond to bit 5 to bit 3 of the lasz field, and bit 1 to bit 0 of the accessing target address are "00."

When the value of lowest 4 bits of the lasz field is "1000", the transfer size is 8 bytes, bit 4 to bit 3 of the accessing target address correspond to bit 5 to bit 4 of the lasz field, and bit 2 to bit 0 of the accessing target address are "000."
When the value of lowest 4 bits of the lasz field is "0000", the transfer size is 32 bytes, bit 4 to bit 3 of the accessing target address correspond to bit 5 to bit 4 of the lasz field, and bit 2 to bit 0 of the accessing target address are "000." The uadd field is a 7-bit or 27-bit field which indicates higher-order bits of the accessing target address. The uadd field differs in the number of bits depending on the value of the alen field. When the alen field is "0", the address length is 12 bits. At this time, the uadd field is 7 bits and indicates bit 11 to bit 5 of the accessing target address. When the alen field is "1", the address length is 32 bits. At this time, the uadd field is 27 bits and indicates bit 31 to bit 5 of the accessing target address.

The tid field is a 3-bit field for associating a serial request packet and a serial response packet.

The serial interface of the present specification supports pipeline processing. That is, before receiving a serial response packet to a serial request packet sent, the integrated circuit-A 101 serving as an initiator can send another serial request packet than the serial request packet which has been sent. Before sending a serial response packet to the serial request packet received, the integrated circuit-B 109 serving as a target can receive and process another serial request packet than the serial request packet which has bee received. However, it is not guaranteed that the order of reception of the serial request packet and the order of transmission of the serial response packet corresponding thereto are the same. The reason why the target does not guarantee the order of transmission of the serial response packet is for shortening the serial response receiving latency time of the initiator. For example, when a serial request packet which does not require time for generation of a serial response packet is received following a serial request packet which requires time for generation of a serial response packet, the serial response packet receiving latency time of the initiator can be shortened by sending the serial response packet to the serial request packet received later, earlier than the serial response packet to the serial request packet received earlier.

The integrated circuit-B 109 stores the value of the tid field at the time of receiving a serial request packet, and outputs the value of the tid field as the r_tid field (to be described later), when the integrated circuit-B 109 sends a corresponding serial response packet. The integrated circuit-A 101 associates a serial request packet and a serial response packet in terms of the r_tid field.

The wdata field is a field including write data transferred from the integrated circuit-A 101 to the integrated circuit-B 109. The wdata field exists only in the serial request packet in write access, and does not exist in the serial request packet in read access.

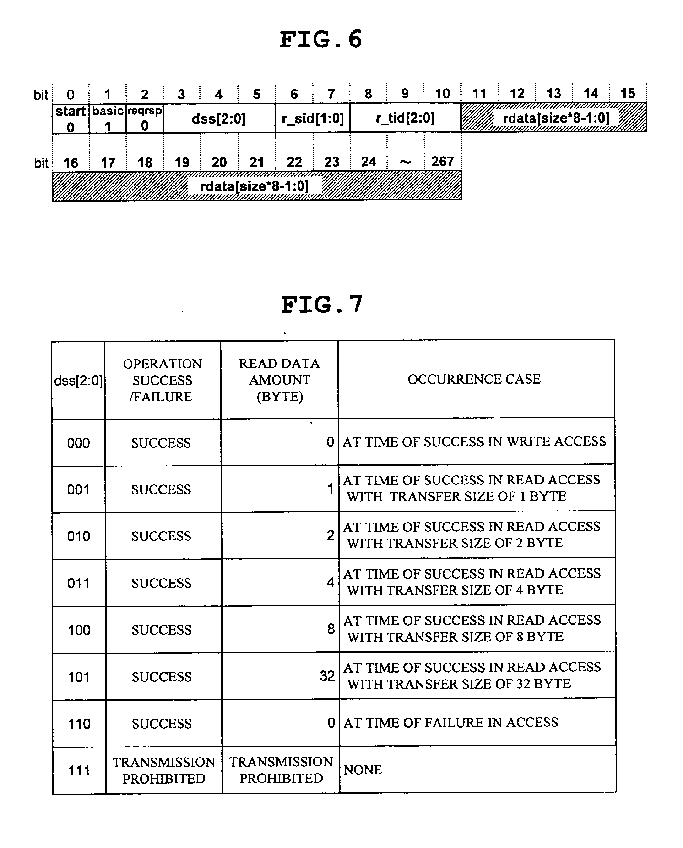

Next, the format of a serial response packet is explained with reference to FIG. 6.

FIG. 6 is a format chart illustrating a serial response packet. A serial response packet includes fields of start, basic, reqrsp, dss, r_sid, r_tid, and rdata.

The start field is a 1-bit field which indicates the head position of the serial packet. The position where the start field is "1" is the head of the serial packet.

The basic field is a 1-bit field which indicates the kind of the serial packet. The packet whose basic field is "1" is a serial request packet or a serial response packet, and the packet whose basic field is "0" is a serial control packet.

The reqrsp field is a 1-bit field which indicates whether a packet is a request packet or a response packet. The packet whose reqrsp field is "0" is a response packet.

The dss field is a 3-bit field which indicates the success or failure of access and the amount of the read data included in a serial response packet. The relationship among a value of the dss field, access success/access failure, and read data amount are explained with reference to FIG. 7.

FIG. 7 is a chart illustrating relationship among a value of the dss field, access success/access failure, and read data amount.

When the value of the dss field is "000", the amount of the read data included in a serial response packet is 0 byte, and the access is a success. That is, "000" is a value of the dss field when succeeding in write access.

When the value of the dss field is "001", the amount of the read data included in a serial response packet is 1 byte, and the access is a success. That is, "001" is a value of the dss field when succeeding in read access with the transfer size of 1 byte.

When the value of the dss field is "010", the amount of the read data included in a serial response packet is 2 bytes, and the access is a success. That is, "010" is a value of the dss field when succeeding in read access with the transfer size of 2 bytes.

When the value of the dss field is "011", the amount of the read data included in a serial response packet is 4 bytes, and the access is a success. That is, "011" is a value of the dss field when succeeding in read access with the transfer size of 4 bytes.

When the value of the dss field is "100", the amount of the read data included in a serial response packet is 8 bytes, and the access is a success. That is, "100" is a value of the dss field when succeeding in read access with the transfer size of 8 bytes.

When the value of the dss field is "101", the amount of the read data included in a serial response packet is 32 bytes, and the access is a success. That is, "101" is a value of the dss field when succeeding in read access with the transfer size of 32 bytes.

When the value of the dss field is "110", the amount of the read data included in a serial response packet is 0 byte, and the access is a failure. That is, "110" is a value of the dss field when not succeeding in read access or write access.

The integrated circuit-B 109 serving as a target is forbidden from outputting "111" as a value of the dss field in the serial interface of the present specification.

The r_sid field is a 2-bit field for associating a serial request packet and a serial response packet. The integrated circuit-B 109 serving as a target stores the value of the sid field at the time of receiving a serial request packet, and outputs the value of the sid field as a value of the r_sid field when sending a corresponding serial response packet. The integrated circuit-A 101 serving as an initiator associates a serial request packet and a serial response packet, in terms of the value of the r_sid field and the value of the r_tid field described later.

The r_tid field is a 3-bit field for associating a serial request packet and a serial response packet. The integrated circuit-B 109 serving as a target stores the value of the tid field at the time receiving a serial request packet, and outputs the value of the tid field as a value of the r_tid field when sending a corresponding serial response packet. The integrated circuit-A 101 serving as an initiator associates a serial request packet and a serial response packet, in terms of the value of the r_tid field and the value of the r_sid field.

The rdata field is data transferred from the integrated circuit-B 109 serving as a target to the integrated circuit-A 101 serving as an initiator. The rdata field exists in a serial response packet only when the read access is successful.

Next, the format of a serial control packet is explained.

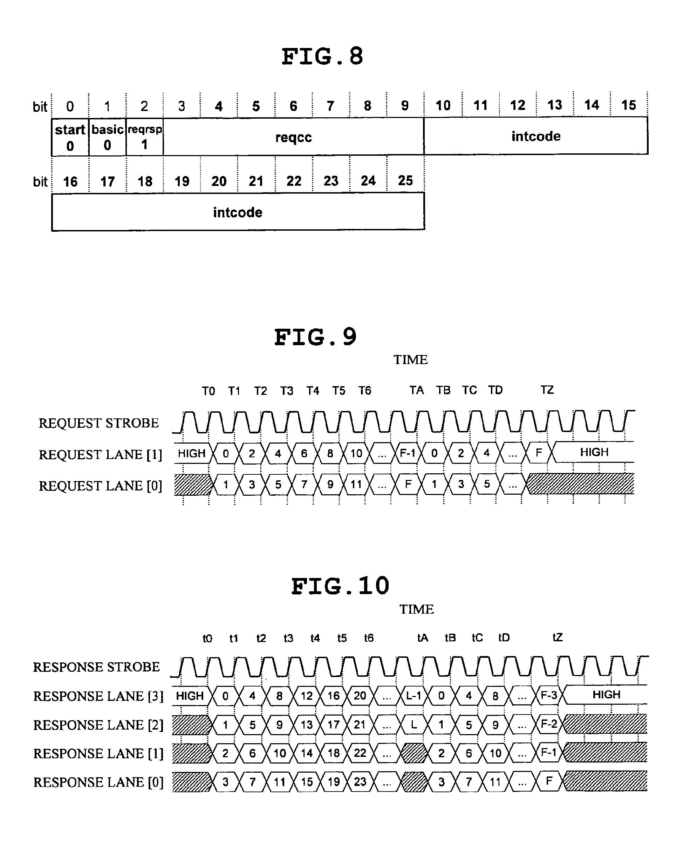

FIG. 8 is a format chart illustrating a serial control packet. A serial control packet includes fields of start, basic, reqrsp, reccc, and intcode.

The start field is a 1-bit field which indicates the head position of the serial packet. The position where the start field is "1" is the head of the serial packet.

The basic field is a 1-bit field which indicates the kind of the serial packet. The packet whose basic field is "1" is a serial request packet or a serial response packet, and the packet whose basic field is "0" is a serial control packet.

The reqrsp field is a 1-bit field which indicates whether a packet is a request packet or a response packet.

The reccc field is a 7-bit field which indicates the kind and the interrupt level of the serial control packet. The upper 3 bits of the reccc field indicates the kind of the serial control packet.

The serial control packet whose upper 3 bits of the reccc field is "100" is a serial control packet including interruption information. In the following description of the present specification, a serial control packet including interruption information is called an interruption packet.

In an interruption packet, lower 4 bits of the reqcc field represent an interrupt level. The interrupt level has 16 levels; the highest interrupt level corresponds to "1111" in the lower 4 bits of the reqcc field, and the lowest interrupt level corresponds to "0000" in the lower 4 bits of the reqcc field. An interruption packet is only a request packet and no response packet exists.

The serial control packet whose upper 3 bits of the reccc field is "000" is a serial control packet which stops the initiator of the serial interface. In the following description of the present specification, the serial control packet which stops the initiator of the serial interface is called an initiator stop packet.

The serial control packet whose upper 3 bits of the reccc field is "001" is a serial control packet which cancels a stop of the initiator of the serial interface. In the following description of the present specification, the serial control packet which cancels a stop of the initiator of the serial interface is called an initiator stop canceling packet.

The intcode field is a 16-bit field which exists only in an interruption packet, and includes the attribute information of interruption.

Here, the situation of serial packet transfer in a serial interface is explained with reference to FIG. 9.

FIG. 9 is a chart illustrating the situation of transfer of a serial request packet and a serial control packet in a serial interface. FIG. 10 is a chart illustrating the situation of transfer of a serial response packet in a serial interface. The serial interface according to one embodiment of the present invention is an interface of a source synchronous system in which the information transmitter outputs both a signal indicative of information and a signal indicative of the timing of the information.

A serial request packet is transferred synchronizing with the up edge of a request strobe. A request strobe is supplied to the integrated circuit-B 109 from the integrated circuit-A 101 by the strobe signal 1201 of the signal line group-AB 107. In a request lane, the serial request packet explained above is transferred sequentially from the start field and in the order from MSB (Most Significant-Bit) of the request lane. In FIG. 9, the start field is indicated by "0." The start field is typically transferred using MSB of the request lane. Therefore, unlike the transfer of the parallel request packet in the integrated circuit-A 101 explained above, in the serial interface according to one embodiment of the present invention, a signal which corresponds to the request valid signal is not required. This is for decreasing the number of signal lines of the serial interface. The target of the serial interface according to one embodiment of the present invention monitors MSB of the request lane and starts reception of a serial request packet or a serial control packet at the time when MSB of the request lane of "0" is detected. The target detects the final bit of the present serial packet (a bit indicated by "F" (Final) in FIG. 9) and the head position of the next serial packet, by analyzing the contents of the serial packet received. When the number of bits of the serial request packet or the serial control packet is not the multiple of the request lane number, dummy data is outputted to signal lines other than MSB of the request lane.

Similarly, the serial response packet or the serial control packet is transferred one by one, with the start field by MSB of the response lane, followed by the order of basic, reqrsp, etc. , with the MSB side of the response lane in the lead.

Although one strobe signal is employed in FIG. 9, a signal group composed of two lines of LVDS (Low Voltage Differential Signaling) may be employed as a strobe signal. In this case, although the signal line number increases by two for the whole serial interface, the strobe signal which changes at two times the frequency of other signals can be decreased in amplitude; therefore the upper limit of the operating frequency may be easily increased. For example, when the physical layer circuit of a DDR2-SDRAM controller which transmits a strobe as an LVDS signal is employed as a physical layer circuit of the serial interface of the present invention, the data rate per signal line of the request lane or the response lane can be easily raised to 800 M bits/s. In this case, the transfer throughput of the serial interface in the present embodiment will be 600 M byte/s in the total of the request lane and the response lane.

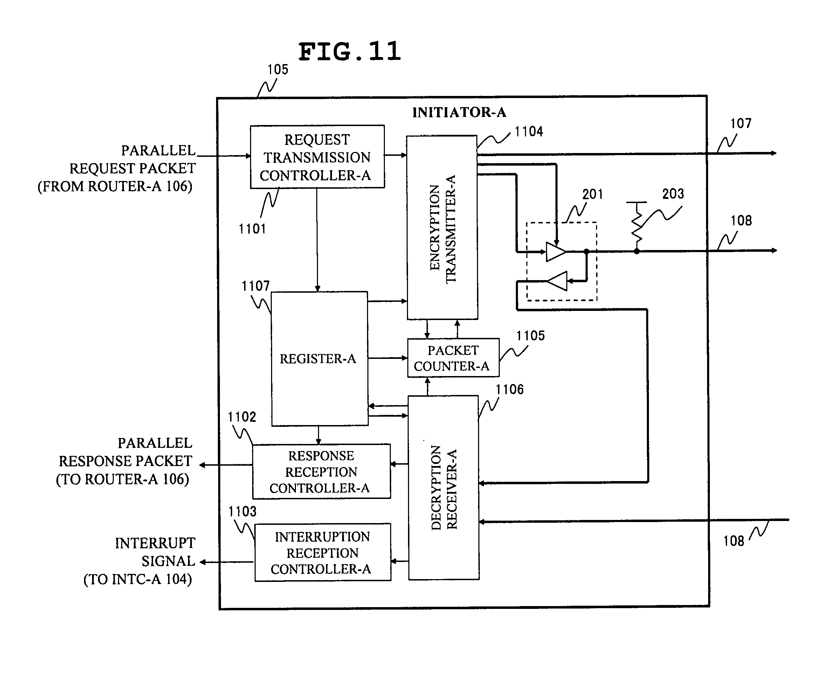

Now the description returns to the explanation of the integrated circuit-A 101. The initiator-A 105 included in the integrated circuit-A 101 is explained with reference to FIG. 11.

FIG. 11 is a block diagram illustrating the structure of the initiator-A 105.

The initiator-A 105 includes a request transmission controller-A 1101, a response reception controller-A 1102, an interruption reception controller-A 1103, an encryption transmitter-A 1104, a packet counter-A 1105, a decryption receiver-A 1106, a register-A 1107, a three-state buffer 201, and a pull-up resistor 203.

The request transmission controller-A 1101 serves as a junction circuit which receives a parallel request packet from the router-A 106, and transmits the parallel request packet to the register-A 1107 when the address of the parallel request packet indicates the register-A 1107, and transmits the parallel request packet to the encryption transmitter-A 1104 when the address of the parallel request packet does not indicate the register-A 1107.

The response reception controller-A 1102 serves as a junction circuit which receives a parallel response packet from the decryption receiver-A 1106 and the register-A 1107, and transmits the parallel response packet to the router-A 106.

The interruption reception controller-A 1103 serves as an interruption information junction circuit which receives an interruption packet from the decryption receiver-A 1106, analyzes the contents of the interruption packet, and generates an interrupt signal to INTC-A 104 based on the analysis result.

The encryption transmitter-A 1104 serves as a junction circuit which receives a parallel request packet from the request transmission controller-A 1101, converts the parallel request packet into a serial request packet, encrypts the serial request packet, and transmits the encrypted serial request packet to the integrated circuit-B 109 via the signal line group-AB 107. When relaying the serial request packet, the encryption transmitter-A 1104 performs the following processing in addition. When the serial request packet transmission enabling signal supplied from the packet counter-A 1105 is a deassertion state, the encryption transmitter-A 1104 does not transmit the serial request packet to the integrated circuit-B 109. Whenever the transmission of the serial request packet to the integrated circuit-B 109 is completed, the encryption transmitter-A 1104 notifies the packet counter-A 1105 of the fact that the transmission of the serial request packet has been completed and of the value of rw field of the serial request packet transmitted. Referring to a request lane number register-A to be described later, the encryption transmitter-A 1104 transmits a serial request packet, using the information signal line group which is included in the signal line group-AB 107 and possesses the number of signal lines specified by the value of the register. Referring to the value of an encryption function enabling register-A (to be described later) and the value of an encryption key register-A (to be described later), respectively, the encryption transmitter-A 1104 encrypts a serial request packet using a cryptographic key specified by the encryption key register-A, when the value of the encryption function enabling register-A indicates that the encryption function is enabled.

The packet counter-A 1105 possesses an outstanding counter, a read outstanding counter, and a write outstanding counter.

The outstanding counter increments the count value by one, whenever the outstanding counter is notified by the encryption transmitter-A 1105 that the transmission of the serial request packet has been completed, and decrements the count value by one, whenever the outstanding counter is notified by the decryption receiver-A 1106 that the reception of the serial response packet has been completed. However, the outstanding counter does not change the count value, when the transmission of the serial request packet and the reception of the serial response packet are completed at the same time. The outstanding counter is set to "0" at the time of initialization of the integrated circuit-A 101.

The read outstanding counter increments the count value by one, whenever the read outstanding counter is notified by the encryption transmitter-A 1105 that the transmission of the serial request packet whose rw field is "1" has been completed, and decrements the count value by one, whenever the read outstanding counter is notified by the decryption receiver-A 1106 that the reception of the serial response packet corresponding to the serial request packet has been completed. However, the read outstanding counter does not change the count value, when the transmission of the serial request packet whose rw field is "1", and the reception of the serial response packet corresponding to the serial request packet are performed at the same time. The read outstanding counter is set to "0" at the time of initialization of the integrated circuit-A 101.

The write outstanding counter increments the count value by one, whenever the write outstanding counter is notified by the encryption transmitter-A 1105 that the transmission of the serial request packet whose rw field is "0" has been completed, and decrements the count value by one, whenever the write outstanding counter is notified by the decryption receiver-A 1106 that the reception of the serial response packet corresponding to the serial request packet has been completed. However, the write outstanding counter does not change the count value, when the transmission of the serial request packet whose rw field is "0", and the reception of the serial response packet corresponding to the serial request packet are performed at the same time. The write outstanding counter is set to "0" at the time of initialization of the integrated circuit-A 101.

The packet counter-A 1105 refers to the value of a maximum outstanding register-A (to be described later), the value of a maximum read outstanding register-A (to be described later), and the value of a maximum write outstanding register-A (to be described later). The packet counter-A 1105 holds, to an assertion state, the serial request packet transmission enabling signal to the encryption transmitter-A 1105, when the value of the maximum outstanding register-A is larger than the value of the outstanding counter, and the value of the maximum read outstanding register-A is larger than the value of the read outstanding counter, and the value of the maximum write outstanding register-A is larger than the value of the write outstanding counter.

The decryption receiver-A 1106 serves as a junction circuit which receives a serial packet from the integrated circuit-B 109 via the signal line group-BA 108, and transmits the serial packet to the response reception controller-A 1102 or the interruption reception controller-A 1103. When relaying the serial packet, the decryption receiver-A 1106 performs the following processing in addition. Referring to the value of a response lane number register-A to be described later, the decryption receiver-A 1106 receives a serial packet using the information signal group which is included in the signal line group-BA 108 and possesses the number of signal lines specified by the register. The decryption receiver-A 1106 analyzes the contents of the serial packet received from the integrated circuit-B 109, and determines whether the present serial packet is a serial response packet or an interruption packet. When the serial packet received is a serial response packet, the decryption receiver-A 1106 converts the serial packet into a parallel response packet and transmits the parallel response packet to the response reception controller-A 1102. At this time, the decryption receiver-A 1106 refers to the value of an encryption function enabling register-A (to be described later) and a decryption key register-A (to be described later), respectively, and performs decryption using a cryptographic key specified by the register-A, when the value of the encryption function enabling register-A indicates that the encryption function is enabled.

When the decryption receiver-A 1106 determines that the serial packet received is an interruption packet, the decryption receiver-A 1106 transmits the interruption packet to the interruption reception controller-A 1103.

The register-A 1107 holds control information necessary for the integrated circuit-A 101 to communicate with the integrated circuits-B 109 using the serial interface. The register-A 1107 analyzes the parallel request packet received from the request transmission controller-A 1101, performs the processing to each register (to be described later) based on the analysis result, generates a parallel response packet based on the processing result, and transmits the.parallel response packet to the encryption transmitter-A 1102.

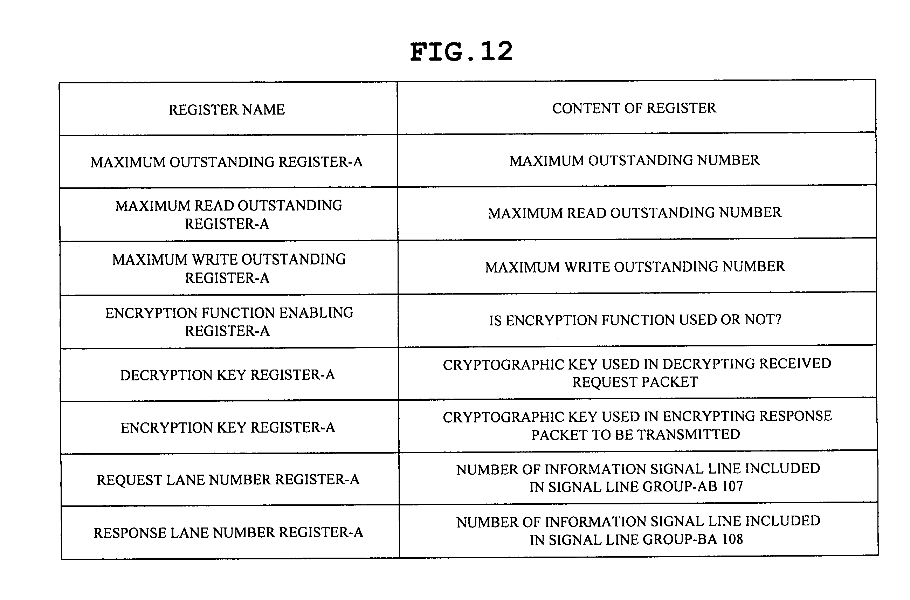

Next, a register group included in the register-A 1107 is explained with reference to FIG. 12. FIG. 12 is a chart illustrating the register group included in the register-A 1107.

The register-A 1107 includes a maximum outstanding register-A, a maximum read outstanding register-A, a maximum write outstanding register-A, an encryption function enabling register-A, an encryption key register-A, a decryption key register-A, a request lane number register-A, and a response lane number register-A.

The maximum outstanding register-A holds the maximum outstanding number of the initiator-A 105. The value of the maximum outstanding register-A is set to "1" at the time of initialization of the integrated circuit-A 101, and is updated by the write access by CPU-A 102.

The maximum read outstanding register-A holds the maximum outstanding number of the read access of the initiator-A 105. The value of the maximum read outstanding register-A is set to "1" at the time of initialization of the integrated circuit-A 101, and is updated by the write access by CPU-A 102.

The maximum write outstanding register-A holds the maximum outstanding number of the write access of the initiator-A 105. The value of the maximum write outstanding register-A is set to "1" at the time of initialization of the integrated circuit-A 101, and is updated by the write access by CPU-A 102.

The encryption function enabling register-A sets up a value indicating whether a serial request packet and a serial response packet, which the initiator-A 105 transmits and receives, are to be encrypted or not. When the value of the encryption function enabling register-A is "1", the encryption function is enabled, and the serial request packet and the serial response packet are encrypted, and transmitted and received respectively via the serial interface.

The decryption key register-A holds a cryptographic key which the decryption receiver-A 1106 uses in decrypting the encrypted packet. The encryption key register-A holds a cryptographic key which the encryption transmitter-A 1104 uses in encrypting a serial request packet.

The request lane number register-A indicates the number of the information signal line group included in the signal line group-AB 107. The value of the request lane number register-A is set to "1" at the time of initialization of the integrated circuit-A 101, and is updated by the write access by CPU-A 102. The response lane number register-A indicates the number of the information signal line group included in the signal line group-BA 108. The value of the response lane number register is set to "1" at the time of initialization of the integrated circuit-A 101, and is updated by the write access by CPU-A 102.

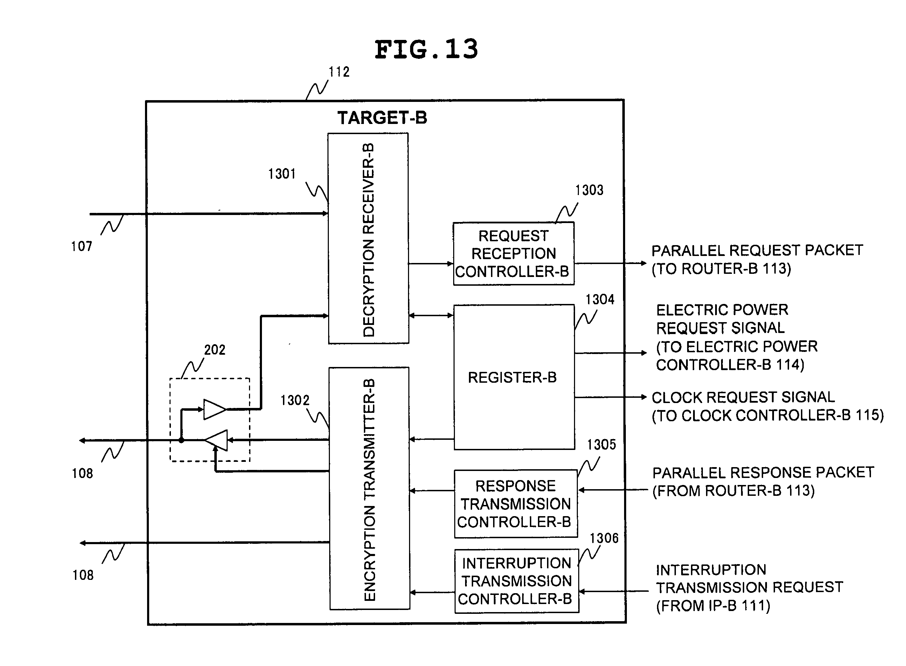

Next, the structure of the target-B 112 is explained with reference to FIG. 13.

FIG. 13 is a block diagram illustrating the structure of the target-B 112.

The target-B 112 includes a decryption receiver-B 1301, an encryption transmitter-B 1302, a request reception controller-B 1303, a register-B 1304, a response transmission controller-B 1305, an interruption transmission controller-B 1306, and a three-state buffer 202.

The decryption receiver-B 1301 serves as a receiving circuit which, referring to the value of a request lane number register-B (to be described later), receives a serial request packet from the integrated circuit-A 101 via the information signal group which is included in the signal line group-AB 107 and possesses the number of signal lines specified by the present register. After converting the serial request packet received into a parallel request packet, the decryption receiver-B 1301 performs the following processing. The decryption receiver-B 1301 refers to the value of an encryption function enabling register-B (to be described later) and a decryption key register-B (to be described later), respectively, and decrypts the serial request packet using the cryptographic key specified by the decryption key register-B, when the value of the encryption function enabling register-B indicates that the encryption function is enabled. The decryption receiver-B 1301 analyzes the contents of the parallel request packet, and determines whether the parallel request packet includes the access request to the register-B 1304, or it includes the access request to the memory-B 110 and to IP-B 111. The decryption receiver-B 1301 transmits the parallel request packet to the register-B 1304, when the parallel request packet includes the access request to the register-B 1304, and transmits the parallel request packet to the router-B 113, when the parallel request packet includes the access request to the memory-B 110 and to IP-B 111.

The request reception controller-B 1303 serves as a junction circuit which receives a parallel request packet from the decryption receiver-B 1301 and transmits the parallel request packet to the router-B 113.

The register-B 1304 holds control information necessary for the integrated circuit-B 109 to communicate with the integrated circuit-A 101 via a serial interface. The register-B 1304 accesses the register group (to be described later), based on the parallel request packet received from the request reception controller-B 1303, generates a parallel response packet based on the access, and transmits the parallel response packet to the encryption transmitter-B 1302.

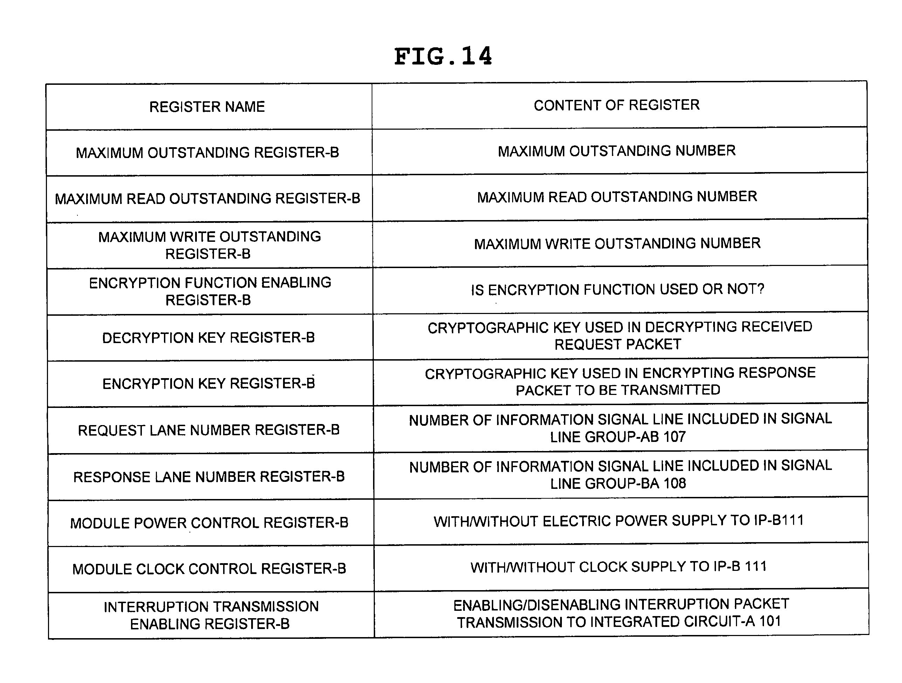

Next, a register group included in the register-B 1304 is explained with reference to FIG. 14.

FIG. 14 is a chart illustrating the register group included in the register-B 1304. The register-B 1304 includes a maximum outstanding register-B, a maximum read outstanding register-B, a maximum write outstanding register-B, an encryption function enabling register-B, a decryption key register-B, an encryption key register-B, a request lane number register-B, a response lane number register-B, a module power control register-B, a module clock control register-B, and an interruption transmission enabling register-B.

The maximum outstanding register-B holds the maximum outstanding number to which the target-B 112 can respond. The value of the maximum outstanding register-B is set to "4" at the time of initialization of the integrated circuit-B 109, and is updated by the write access. However, when the value of the write data of the write access is equal to or greater than "5", the value of the maximum outstanding register-B is not updated, but an access failure is notified to the encryption transmitter-B 1302.

The maximum read outstanding register-B holds the maximum outstanding number of the read access to which the target-B 112 can respond. The value of the maximum read outstanding register-B is set to "2" at the time of initialization of the integrated circuit-B 109, and is updated by the write access. However, when the value of the write data of the write access is equal to or greater than "3", the value of maximum read outstanding register-B is not updated, but an access failure is notified to the encryption transmitter-B 1302.

The maximum write outstanding register-B holds the maximum outstanding number of the write access to which the target-B 112 can respond. The value of the maximum write outstanding register-B is set to "2" at the time of initialization of the integrated circuit-B 105, and is updated by the write access. However, when the value of the write data of the write access is equal to or greater than "3", the value of the maximum write outstanding register-B is not updated, but an access failure is notified to the encryption transmitter-B 1302.

The encryption function enabling register-B sets up a value indicating whether a serial request packet and a serial response packet, which the target-B 112 transmits and receives, are to be encrypted or not. When the value of the encryption function enabling register-B is "1", the serial request packet and the serial response packet are encrypted, and transmitted and received respectively, via the serial interface.

The decryption key register-B holds a cryptographic key which the decryption receiver-B 1301 uses in decrypting the serial request packet. The encryption key register-B holds a cryptographic key used which the encryption transmitter-B 1302 uses in encrypting a serial response packet.

The request lane number register-B indicates the number of the information signal line group included in the signal line group-AB 107. The value of the request lane number register-B is set to "1" at the time of initialization of the integrated circuit-B 109, and is updated by the write access. The response lane number register-B indicates the number of the information signal line group included in the signal line group-BA 108. The value of the response lane number register-B is set to "1" at the time of initialization of the integrated circuit-B 109, and is updated by the write access.

The module power control register-B indicates whether an electric power is to be supplied or not to IP-B 111. When the value of the module power control register-B is "1", the electric power supply signal to the electric power controller-B 114 is held in an assertion state. When the value of the module power control register-B is "0", the electric power supply signal to the electric power controller-B 114 is held in a deassertion state. The value of the module power control register-B is set to "1" at the time of initialization of the integrated circuit-B 109, and is updated by the write access.

The module clock control register-B indicates whether a clock supply is to be made or not to IP-B 111. When the value of the module clock control register-B is "1", the clock supply signal to the clock controller-B 115 is held in an assertion state. When the value of the module clock control register-B is "0", the clock supply signal to the clock controller-B 115 is held in a deassertion state. The value of the module clock control register-B is set to "1" at the time of initialization of the integrated circuit-B 109, and is updated by the write access.

The interruption transmission enabling register-B indicates whether the interruption packet transmission to the integrated circuit-A 101 is permitted or not. When the value of the interruption transmission enabling register-B is "0", the interruption packet transmission to the integrated circuit-A 101 is prohibited. When the value of the interruption transmission enabling register-B is "1", the interruption packet transmission to the integrated circuit-A 101 is permitted. The value of the interruption transmission enabling register-B is set to "0" at the time of initialization of the integrated circuit-B 109, and is updated by the write access.

The response transmission controller-B 1305 serves as a junction circuit which receives a parallel response packet from the router-B 113, and transmits the parallel response packet to the encryption transmitter-B 1305.

The interruption transmission controller-B 1306 serves as an interruption junction circuit which takes in an interruption transmission request from IP-B 111, generates an interruption packet based on the interruption transmission request, and transmits the interruption packet to the encryption transmitter-B 1302.

Now the description returns to the explanation of the components of the target-B 112.

The encryption transmitter-B 1302 serves as a junction circuit which receives a parallel response packet from the register-B 1304 and the response transmission controller-B 1305 and also receives an interruption packet from the interruption transmission controller-B 1306, converts the received packet into a serial packet, and transmits the serial packet to the integrated circuit-A 101 via the signal line group-BA 108. The encryption transmitter-B 1302 also performs the following processing.

Referring to the response lane number register-B, the encryption transmitter-B 1302 transmits a serial response packet using the information signal line group which is included in the signal line group-BA 108 and possesses the number of signal lines specified by the value of the register. Referring to the value of the encryption function enabling register-B and the value of the encryption key register-B, respectively, the encryption transmitter-B 1302 encrypts a serial response packet using a cryptographic key specified by the encryption key register-B, when the value of the encryption function enabling register-B indicates that the encryption function is enabled. Referring to the value of the interruption transmission enabling register-B, the encryption transmitter-B 1302 does not transmit an interruption packet, when the value of the register does not indicate permission of the interruption packet transmission.

The following explains the access and interruption processing performed between the integrated circuit-A 101 and the integrated circuit-B 109, using the serial interface according to one embodiment of the present invention.

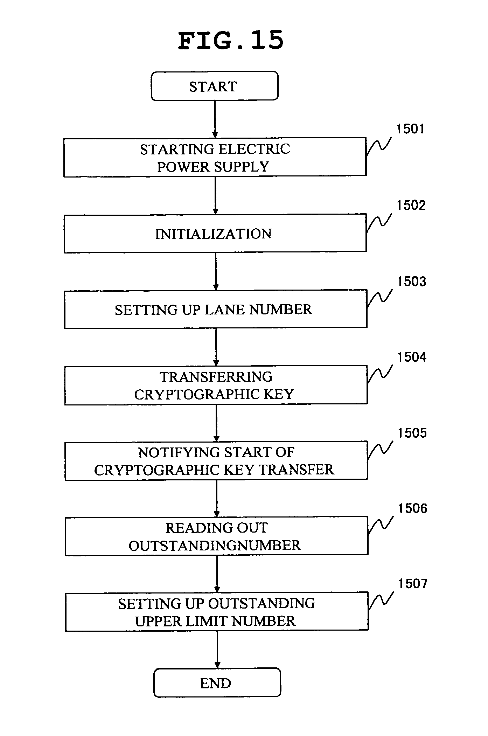

First, the initialization of a serial interface is explained with reference to FIG. 15.

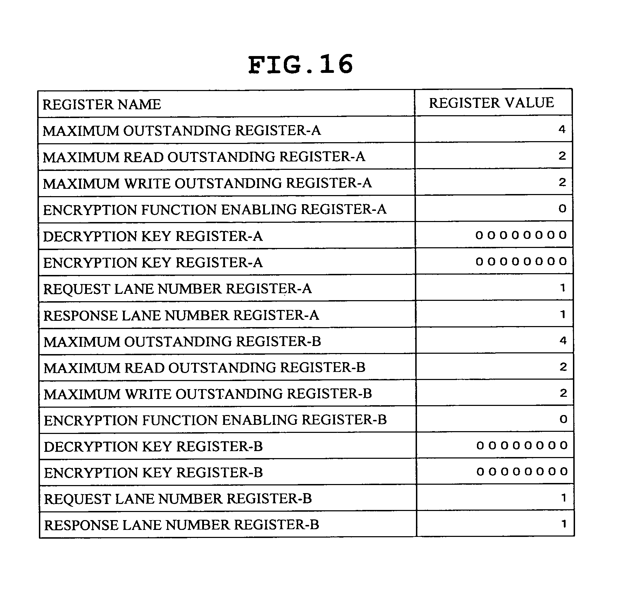

FIG. 15 is a flow chart illustrating a series of initialization processing from the beginning of using of the integrated circuit-A 101 and the integrated circuit-B 109 to the completion of initialization of the serial interface. At the time of the beginning of using of the integrated circuit-A 101 and the integrated circuit-B 109, the electric power is supplied to the integrated circuit-A 101 and the integrated circuit-B 109 (Step S1501). Subsequently, circuit initialization is performed using a reset signal etc. (Step S1502). At the time of completion of processing at Step S1502, registers included in the register-A 1107 and the register-B 1304 possess values as illustrated in FIG. 16. FIG. 16 shows the value of each register included in the register-A 1107 and the register-B 1304 at the time of the completion of the initialization.

Each value of the maximum outstanding register-A, the maximum read outstanding register-A, and the maximum write outstanding register-A is "1", indicating that the integrated circuit-A 101 performs the read access or the write access with the maximum outstanding number of "1." On the other hand, each value of the maximum outstanding register-B, the maximum read outstanding register-B, and the maximum write outstanding register-B is "1", indicating that the integrated circuit-B 109 receives the read access or the write access with the maximum outstanding number of "1." The value of the encryption function enabling register-A and the value of the encryption function enabling register-B are "0", respectively indicating that a packet is not encrypted.

Each of the request lane number register-A and the request lane number register-B indicates that the request lane number is "1", and each of the response lane number register-A and the response lane number register-B indicates that the response lane number is "1."

That is, at the time of completion of Step S1502, the integrated circuit-A 101 has to access the integrated circuit-B 109, with the outstanding of "1", using one request lane and one response lane, and in a not-encrypted state. In this state, the transfer capacity of the serial interface is low and access for information fetching from the outside cannot be prevented by encryption. Therefore, each processing from Step S1503 to Step S1507 is performed to increase the transfer capacity and to prevent access for information fetching from the outside. First, usable request lane number and usable response lane number are increased to enhance the transfer capacity of the serial interface. The reason why the request lane number and the response lane number are initialized to "1", respectively, at the time of the completion of initialization, is to permit a low-cost packaging configuration of a substrate and SiP (System in Package) in which the request lane number and the response lane number are minimized.

In the present embodiment, the usable request lane number and the usable response lane number are "2" and "4", respectively. Therefore, CPU-A 102 performs the write access to write "2" to the request lane number register-A of the register-A 1107 and to the request lane number register-B of the register-B 1304, and to write "4" to the response lane number register-A of the register-A 1107 and to the response lane number register-B of the register-B 1304, respectively (Step S1503).

At the time of execution start of Step S1503, the maximum outstanding number of the serial interface is "1." Therefore, CPU-A 102 transmits a serial request packet of the first write access for writing "2" to the request lane number register-B, and after receiving a serial response packet to the first write access, CPU-A 102 transmits a serial request packet of the second write access for writing "4" to the response lane number register-B.

Since the request lane number is "1" when the integrated circuit-A 101 transmits the serial request packet of the first write access, the integrated circuit-A 101 transmits the serial request packet using one request lane. At this time, since the response lane number is "1", the integrated circuit-B 109 transmits the serial response packet to the first write access using one response lane.

After the initiator-A 105 receives the response packet to the first write access, CPU-A 102 writes "2" to the request lane number register-A, thereby allowing the serial request packet of the second write access to be transferred using two request lanes, as described bellow.

Since the usable request lane number is "2" when the integrated circuit-A 101 transmits the second serial request packet, the integrated circuit-A 101 transmits the serial request packet of the second write access using two request lanes. Since the response lane number is one, the integrated circuit-B 109 transmits the serial response packet to the second write access using one response lane.

After the initiator-A 105 receives the response packet to the second write access, CPU-A 102 writes "4" to the response lane number register-A, thereby allowing a serial response packet to the access following the second write access to be transferred using four response lanes, as described later.

Subsequently, the encryption function of the integrated circuit-A 101 and the integrated circuit-B 109 is validated to prevent access for information fetching from the outside. First, the integrated circuit-A 101 carries out the third write access to write a value to the decryption key register-B of the register-B 1304, and carries out the fourth write access to write a value to the encryption key register-B of the register-B 1304. Furthermore, in the integrated circuit-A 101, CPU-A 102 writes, to the decryption key register-A of the register-A 1107, the same value as the value written to the decryption key register-B, and to the encryption key register-A, the same value as the value written to the encryption key register-B (Step S1504).

In the present embodiment, it is assumed that the value written in the decryption key register-A and the decryption key register-B is "01234567" (hexadecimal), and that the value written in the encryption key register-A and the encryption key register-B is "89ABCDEF" (hexadecimal). At the time of execution at Step S1504, the usable request lane number and the usable response lane number are "2" and "4", respectively, and the write access practiced 2 times on the serial interfaces at Step S1504 uses these lane numbers.

Next, the integrated circuit-A 101 performs the fifth write access to write "1" to the encryption enabling register-B of the register-B 1304. On the other hand, in the integrated circuit-A 101, CPU-A 102 writes "1" to the encryption enabling register-A of the register-A 1107, after receiving a response packet to the fifth write access (Step S1505).

At the time of starting the fifth write access, the encryption function of the integrated circuit-B 109 is invalid. Therefore, the serial request packet and the serial response packet which form the fifth write access is transferred on the serial interface in a not-encrypted state.

After the integrated circuit-A 101 receives the serial response packet of the fifth write access, a serial request packet is encrypted using the cryptographic key "01234567" (hexadecimal) and transferred on the serial interface, and a serial response packet is encrypted using the cryptographic key "89ABCDEF" (hexadecimal) and transferred on the serial interface.

At the end of initialization, the outstanding upper limit number is increased to enhance the access execution capacity of the integrated circuit-A 101 and the access receiving capacity of the integrated circuit-B 109, and consequently to enhance the transfer capacity of the serial interface.

The reason why the outstanding number setup is performed at the last of the series of initialization sequence is as follows; that is, if an outstanding number is plural, there is a possibility that, at the moment when the integrated circuit-A 101 completes reception of a serial response packet, the transfer processing of a serial request packet or another serial response packet may be performed, and if, at the moment when the integrated circuit-A 101 completes reception of a serial response packet, the transfer processing of a serial request packet or another serial response packet is performed, there is a risk that the transfer may fail in connection with the lane number change processing and the encryption function validation processing, which are described above. For example, if the integrated circuit-A 101 receives the serial response packet accompanying a request lane number change processing when the integrated circuit-A 101 is transmitting the serial request packet, the integrated circuit-A 101 changes the request lane number, immediately after receiving the serial response packet accompanying the request lane number change processing, even in the middle of the transmission of the serial request packet. However, the integrated circuit-B 109 cannot know the timing when the request lane number is changed; therefore, it becomes difficult for the integrated circuit-B 109 to receive the serial request packet normally.

Therefore, the processing at Step S1503 and Step S1505 has to be performed with the outstanding number of "1." The processing at Step S1504 can be performed even with the outstanding number equal to or greater than "2." However, since the processing at Step S1504 has to be completed before the processing at Step S1505 starts, the processing at Step S1504 is also performed with the outstanding number of "1." The description now returns to the explanation of the initialization sequence. The integrated circuit-A 101 performs the first, second, and third read access to read out, one by one, the values of the maximum outstanding register-B, the maximum read outstanding register-B, and the maximum write outstanding register-B of the register-B 1304, and obtains value 4, value 2, and value 2 from each register, respectively (Step S1506).

Then, CPU-A 102 sets value 4, obtained by the first read access, to the maximum outstanding register-A of the register-A 1107, sets value 2, obtained by the second read access, to the maximum read outstanding register-A of the register-A 1107, and sets value 2, obtained by the third read access, to the maximum write outstanding register-A of the register-A 1107 (Step S1507).

This is the completion of the initialization sequence of the present embodiment. The transfer capacity of the serial interface increases and the access for information fetching from the outside is prevented by execution of the initialization sequence.

The following explains the volume of the data storage circuit to be mounted in the target-B 112, in order that the integrated circuit-B 109 may support the outstanding numbers indicated by the maximum outstanding register-B, the maximum read outstanding register-B, and the maximum write outstanding register-B.

The target-B 112 of the integrated circuit-B 109 mounts an address/write data buffer to store the accessing target address and write data obtained from the serial request packet, and a read data buffer to store the read data necessary for generating a serial response packet. The address/write data buffer is provided in the decryption receiver-B 1301, and the read data buffer is provided in the encryption transmitter-B 1302. The number of each buffer is equivalent to the maximum number that can be set to the corresponding outstanding register.

The accessing target address and write data which are obtained from the serial request packet are held because, in the present embodiment, the router-B 113 receives the parallel request packet not only from the target-B 112 but from IP-B 111, and hence the parallel request packet transmitted by the target-B 112 is not always receivable unconditionally.

The read data necessary to generate the serial response packet is held because the maximum transfer throughput of the serial interface is lower than the transfer throughput between the target-B 112 and the router-B 113.

Since the maximum outstanding number of the integrated circuit-B 109 is "4", the target-B 112 holds the address information extracted from the serial request packet by four packets. Since the maximum write outstanding number of the integrated circuit-B 109 is "2", the target-B 112 holds the write data extracted from the serial request packet by two packets. Since the maximum read outstanding number of the integrated circuit-B 109 is "2", the target-B 112 holds the read data employed for the serial response packet generation by two packets.

That is, in the present embodiment, by setting up the maximum write outstanding number separately from the maximum outstanding number, the buffer for storing write data is saved by two packets, and by setting up the maximum read outstanding number separately from the maximum outstanding number, the buffer for storing read data is saved by two packets.

Next, the following explains the process in which CPU-A 102 mounted in the integrated circuit-A 101 performs interruption processing, based on the interruption request generated by IP-B 111 mounted in the integrated circuit-B 109.

First, the interruption processing of the side of the integrated circuit-B 109 is explained. IP-B 111 has an operation setting register built in, and upon receiving a write access to the operation setting register, IP-B 111 performs the predetermined processing. When the predetermined processing is completed, IP-B 111 asserts the interrupt signal, notifies to the interruption transmission controller-B 1306 of the target-B 112 that the processing has been completed, and suspends the operation until the operation setting register receives a write access again.

When IP-B 111 asserts the interruption request signal, the interruption transmission controller-B 1306 of the target-B 112 generates an interruption packet, and transmits the interruption packet to the encryption transmitter-B 1302.

The encryption transmitter-B 1302 transmits the interruption packet to the initiator-A 105 via the serial interface. At this time, the encryption transmitter-B 1302 transmits the interruption packet, without encrypting regardless of the state of the encryption function enabling register-B. The encryption transmitter-B 1302 transmits an interruption packet earlier, when both an interruption packet from the interruption transmission controller-B 1306 and a parallel response packet from the response transmission controller-B 1305 are received. The reason why the encryption transmitter-B 1302 does not encrypt the interruption packet is for preventing transmission of the interruption packet from being delayed, when the interruption request from IP-B 111 occurs during execution of the cryptographic key change sequence described later. The reason why the encryption transmitter-B 1302 transmits an interruption packet earlier than a serial response packet is for a quick starting of the interruption processing by CPU-A 102, by transferring the interruption packet to the integrated circuit-A 101 quickly.

Next, the interruption processing of the side of the integrated circuit-A 101 is explained. The decryption receiver-A 1106 of the initiator-A 105 receives a serial packet from the integrated circuit-B 109, analyzes the serial packet, specifies that the serial packet is an interruption packet, and resends the interruption packet to the interruption reception controller-A 1103.

The interruption reception controller-A 1103 analyzes the interruption packet received from the decryption receiver-A 1106, asserts an interrupt signal, and notifies the interruption to INTC-A 104. At this time, the interruption reception controller-A 1103 generates interrupt level information based on values of from bit 3 to bit 0 of the reqcc field of the interruption packet, generates interrupt code information based on the intcode field of the interruption packet, and supplies INTC-A 104 with the interrupt level information and the interrupt code information together.

INTC-A 104 asserts the interrupt signal and notifies to CPU-A 102 that the interrupt has occurred. CPU-A 102 detects that the interrupt signal is in an assertion state, interrupts the processing under execution currently, and executes an interruption processing program. When CPU-A 102 executes the interruption processing program, copying of the data generated by IP-B 111 from the memory-B 110 to the memory-A 103, and resetting of the operation setting register of IP-B 111 are performed.

As described above, the repetitive operation of IP-B 111 of the integrated circuit-B 109 can be performed under the control of CPU-A 102 mounted in the integrated circuit-A 101.

Next, control of the low power mode of the integrated circuit-B 109 by the integrated circuit-A 101 is explained. The integrated circuit-B 109 according to one embodiment of the present invention is provided with the following three low power modes. The first low power mode is electric power supply cutoff to IP-B 111, the second low power mode is clock supply cutoff to IP-B 111, and the third low power mode is power and clock supply cutoff to the packet storing buffer of the target-B 112.

First, the first low power mode is explained. The first low power mode is started or stopped by the integrated circuit-A 101 writing a value in the module power control register-B of the integrated circuit-B 109.

When the module power control register-B holds "0", the target-B 112 puts the electric power supply signal to the electric power controller-B 114 into a deassertion state, and stops the electric power supply to IP-B 111. When the module power control register-B holds "1", the target-B 112 puts the electric power supply signal to the electric power controller-B 114 into an assertion state, and practices the electric power supply to IP-B 111. CPU-A 102 performs a write access to the module power control register-B via the serial interface. Writing "0" to the module power control register-B, CPU-A 102 stops the electric power supply to IP-B 111, and writing "1" to the module power control register-B, CPU-A 102 practices the electric power supply to IP-B 111.

Next, the second low power mode is explained. The second low power mode is started or stopped by the integrated circuit-A 101 writing a value in the module clock control register-B of the integrated circuit-B 109. When the module clock control register-B holds "0", the target-B 112 puts the clock supply signal to the clock controller-B 115 into a deassertion state, and stops the clock supply to IP-B 111. When the module clock control register-B holds "1", the target-B 112 puts the clock supply signal to the clock controller-B 115 into an assertion state, and practices the clock supply to IP-B 111. CPU-A 102 performs a write access to the module clock control register-B via the serial interface. Writing "0" to the module clock control register-B, CPU-A 102 stops the clock supply to IP-B 111, and writing "1" to the module clock control register-B, CPU-A 102 practices the clock supply to IP-B 111.

Next, the third low power mode is explained. The third low power mode is practiced by the integrated circuit-A 101 writing, to the maximum outstanding number setting register-B, the maximum write outstanding register-B, and the maximum read outstanding number setting register-B of the integrated circuit-B 109, a value smaller than the value which the register group holds. The target-B 112 supplies the power and the clock only to the address buffer of volume necessary to correspond to the maximum outstanding register-B. The target-B 112 supplies the power and the clock only to the write data buffer of volume necessary to correspond to the smaller value among the values of the maximum outstanding register-B and the maximum write outstanding register-B. The target-B 112 supplies the power and the clock only to the read data buffer of volume necessary to correspond to the smaller value among the values of the maximum outstanding register-B and the maximum read outstanding register-B.

In the present embodiment, at the time of completing initialization of the serial interface, the value of the maximum outstanding register-B is "4", the value of the maximum write outstanding register-B is "2", and the value of the maximum read outstanding register-B is "2." Consequently, in the target-B 112 at the time of completion of initialization of the serial interface, the power and the clock are supplied to the write data buffer by two packets, the power and the clock are supplied to the address buffer by four packets, and the power and the clock are supplied to the read data buffer by two packets.

When value 1 is written to the maximum outstanding register-B from the present state, the state changes to a new state where the power and the clock are supplied to a buffer for one packet of each of the address buffer, the write data buffer, and the read data buffer of the target-B 112. This fact means that the power consumed by each buffer is reduced compared with the power at the time of completion of the initialization.

In order to avoid failure occurrence in the serial interface due to the disagreement of the outstanding number between the integrated circuit-A 101 and the integrated circuit-B 109, CPU-A 102 sets, respectively, the value of the maximum outstanding register-B to the maximum outstanding register-A, the value of the maximum read outstanding register-B to the maximum read outstanding register-A, and the value of maximum write outstanding register-B to the maximum write outstanding register-A.

Next, lane number change processing is explained. The reason for changing the lane number is as follows. In write access, write data is transferred from the integrated circuit-A 101 to the integrated circuit-B 109. Therefore, it is desirable that the request lane number is greater, because the transfer time is shorter. On the other hand, in read access, read data is transferred from the integrated circuit-B 109 to the integrated circuit-A 101. Therefore, it is desirable that the response lane number is greater, because the transfer time is shorter.

However, since the request lane number and the response lane number are directly linked with the cost of an integrated circuit or a substrate carrying the integrated circuit, in the viewpoint of cost, a smaller request lane number or a smaller response lane number is more desirable.

When attention is paid to operation of an integrated circuit, there are a time zone in which a read access is mainly performed, and a time zone in which a write access is mainly performed in the integrated circuit. In the present embodiment, the integrated circuit-A 101 performs write access on the serial interface when setting up data to the register of IP-B 111 and starting, and performs read access on the serial interface when reading data generated by IP-B 111 from the memory-B 110 after the processing of IP-B 111 is completed.

Therefore, transfer performance will be improved under the restricted conditions of cost, if a request lane and a response lane are designed so that the transmission direction thereof may be changed, and if the transmission direction thereof is set up according to operation situation, and if the request lane number register-A and the response lane number register-A of the integrated circuit-A 101, and the request lane number register-B and the response lane number register-B of the integrated circuit-B 109 are set up according to the setup of the transmission direction.

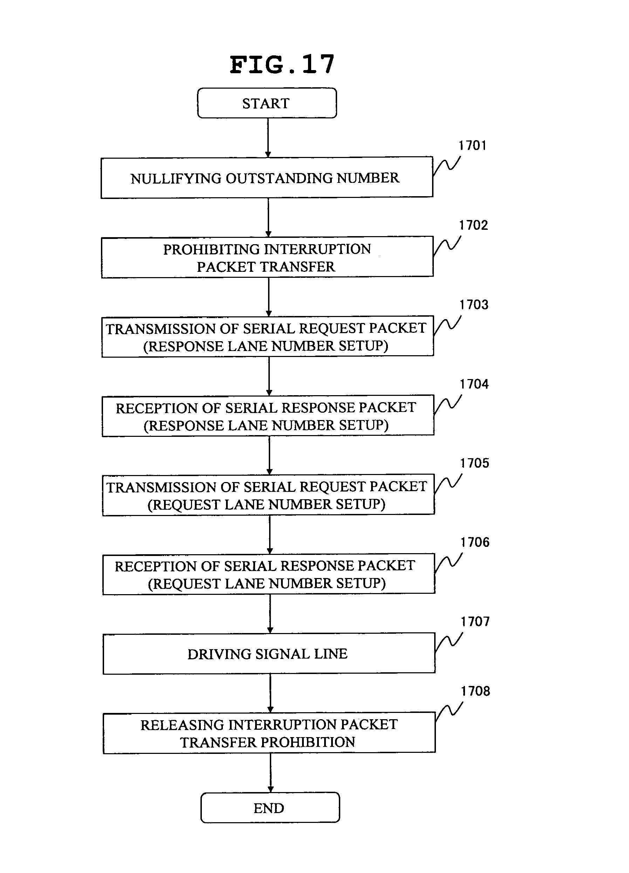

In the following, the operation of the integrated circuit-A 101 is explained with reference to FIG. 17, when the transfer performance in write access is improved by changing the request lane number to "4" and the response lane number to "2."

FIG. 17 is a flow chart illustrating a lane number change sequence. In advance of the lane number change, CPU-A 102 stops a new parallel request packet transmission until CPU-A 102 receives all the parallel response packets to the issued parallel request packet, thereby reducing the outstanding number of CPU-A 102 to zero (Step S1701). In the present embodiment, since all the access on the serial interface except transfer of an interruption packet are performed by CPU-A 102, when the outstanding number of CPU-A 102 is reduced to zero, the outstanding number of the serial interface is also reduced to zero.

Next, the integrated circuit-A 101 writes "0" to the interruption transmission enabling register-B, and stops the interruption packet transfer from the integrated circuit-B 109 to the integrated circuit-A 101 (Step S1702). Next, the integrated circuit-A 101 transmits, to the integrated circuit-B 109, a serial request packet for writing "2" to the response lane number register-B (Step S1703).

The integrated circuit-B 109 transmits a serial response packet to the serial request packet. Immediately after completing transmission, the integrated circuit-B 109 stops the drive of two of the response lanes, making them high impedance. In the integrated circuit-A 101, CPU-A 102 sets value 2 to the response lane number register-A after completing the reception of the serial response packet (Step S1704).

At the time of completion of Step S1504, the request lane number and the response lane number are "2", respectively. Two signal lines which are not included in the request lane nor in the response lane start shifting to a HIGH level due to the operation of the pull-up resistor 203.

Next, the integrated circuit-A 101 transmits, to the integrated circuit-B 109, a serial request packet for writing value 4 to the request lane number register-B (Step S1705). The integrated circuit-B 109 transmits a serial response packet to the serial request packet. In the integrated circuit-A 101, CPU-A 102 sets value 4 to the request lane number register-A, after completing the reception of the serial response packet (Step S1706). The present serial response packet is transferred using two response lanes.

Immediately after receiving the serial response packet at Step S1706, the integrated circuit-A 101 starts the drive of two signal lines, which the integrated circuit-B 109 has stopped at Step S1704 (Step S1707).

At the time of completion of Step S1707, the request lane number is "4", and the response lane number is "2." Accordingly, as compared with immediately after the completion of the initialization sequence, the write access can be processed at higher speed.

Finally, the integrated circuit-A 101 writes "1" to the interruption transmission enabling register-B, to permit the integrated circuit-B 109 to transmit an interruption packet to the integrated circuit-A 101 (Step S1708).

In the lane number change sequence, the lane number reduction processing (Step S1703, Step S1704) is performed earlier than the lane number increase processing (Step S1705, Step S1706) in order to avoid the signal collision in the serial interface.

From the same reason, for example, when returning the request lane number and the response lane number from the state at the time of completion of Step S1707 (the request lane number of "4", the response lane number of "2") to the state at the time of initialization completion (the request lane number of "2", the response lane number of "4"), the request lane number is decreased earlier and then, the response lane number is increased.

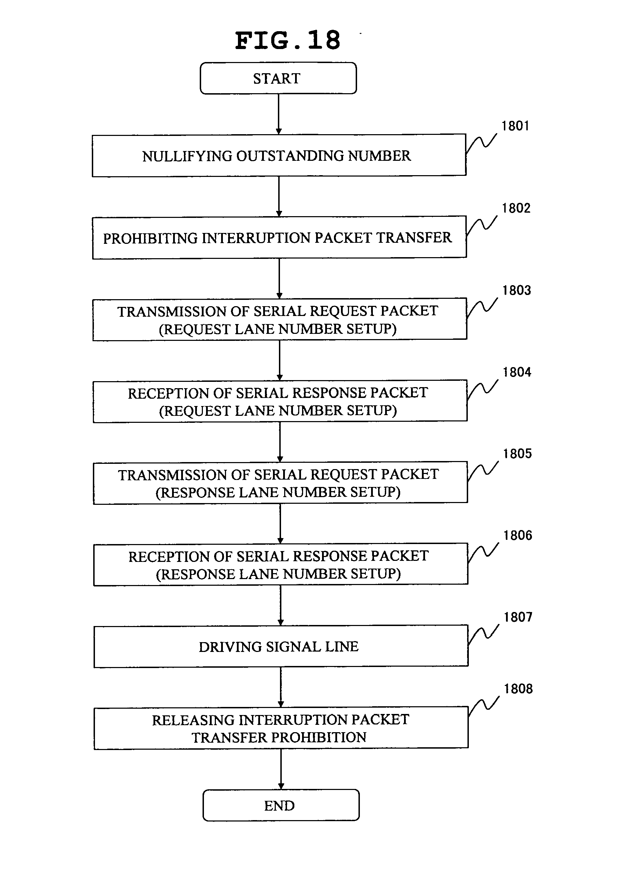

In the following, the processing in returning the request lane number and the response lane number from the state at the time of completion of Step S1707 to the state at the time of initialization completion is explained with reference to FIG. 18.

FIG. 18 is a flow chart illustrating another lane number change sequence. In advance of the lane number change, CPU-A 102 stops a new parallel request packet transmission until CPU-A 102 receives all the parallel response packets to the issued parallel request packet, thereby reducing the outstanding number of CPU-A 102 to zero (Step S1801).

Next, the integrated circuit-A 101 writes "0" to the interruption transmission enabling register, and stops the interruption packet transfer from the integrated circuit-B 109 to the integrated circuit-A 101 (Step S1802).

Next, the integrated circuit-A 101 transmits, to the integrated circuit-B 109, a serial request packet for writing value 2 to the request lane number register-B (Step S1803). Integrated circuit-B 109 transmits a serial response packet to the serial request packet. Immediately after completing the reception of the present serial response packet, the integrated circuit-A 101 stops the drive of two of the request lanes, making them high impedance.

In the integrated circuit-A 101, CPU-A 102 sets value 2 to the request lane number register-A, after completing the reception of the serial response packet (Step S1804).

At the time of completion of Step S1804, the request lane number and the response lane number are "2", respectively. Two signal lines which are not included in the request lane nor in the response lane start shifting to a HIGH level due to the operation of the pull-up resistor 203.

Next, the integrated circuit-A 101 transmits, to the integrated circuit-B 109, a serial request packet for writing value 4 to the response lane number register-B (Step S1805). The integrated circuit-B 109 transmits a serial response packet to the serial request packet. In the integrated circuit-A 101, CPU-A 102 sets value 4 to the response lane number register-A, after completing the reception of the serial response packet (Step S1806). The present serial response packet is transferred using two response lanes.

Immediately after transmitting the serial response packet, the integrated circuit-B 109 starts the drive of two signal lines which the integrated circuit-A 101 has stopped at Step S1804 (Step S1807).

At the time of completion of Step S1807, the request lane number is "2", and the response lane number is "4." Accordingly, the read access can be processed at higher speed similarly to the state immediately after the completion of the initialization sequence.

Finally, the integrated circuit-A 101 writes "1" to the interruption transmission enabling register-B, to permit the integrated circuit-B 109 to transmit an interruption packet transmission to the integrated circuit-A 101 (Step S1808).

Next, the following explains the processing in which the initiator-A 105 of the integrated circuit-A 101 changes a lane number autonomously, not depending on the control of CPU-A 102,

Here, why an autonomous lane number control is desired is explained briefly. In recent years, the multitask processing in which parallel processing of plural pieces of processing (plural tasks) is performed by time sharing is widely practiced in apparatuses with integrated circuits. In multitask processing, it is difficult to switch a lane number by the processor which performs a task. This is because there is no guarantee that a lane number which is appropriate for a certain task is also appropriate for another task. There is also no guarantee that the optimal request lane number and the optimal response lane number can be grasped at the time of a software development. This is because the development time of an integrated circuit and the development time of software are not necessarily same, and software is developed for plural integrated circuits in many cases. Consequently, in the system of multitasking, in order to process access on a serial interface with a suitable lane number irrespective of a task, it is desirable for a circuit which relays all the access on a serial interface to monitor the use situation of a request lane and a response lane, and to change a lane number dynamically according to the use situation. In the following, the autonomous lane number change processing by the initiator-A 105 is explained.

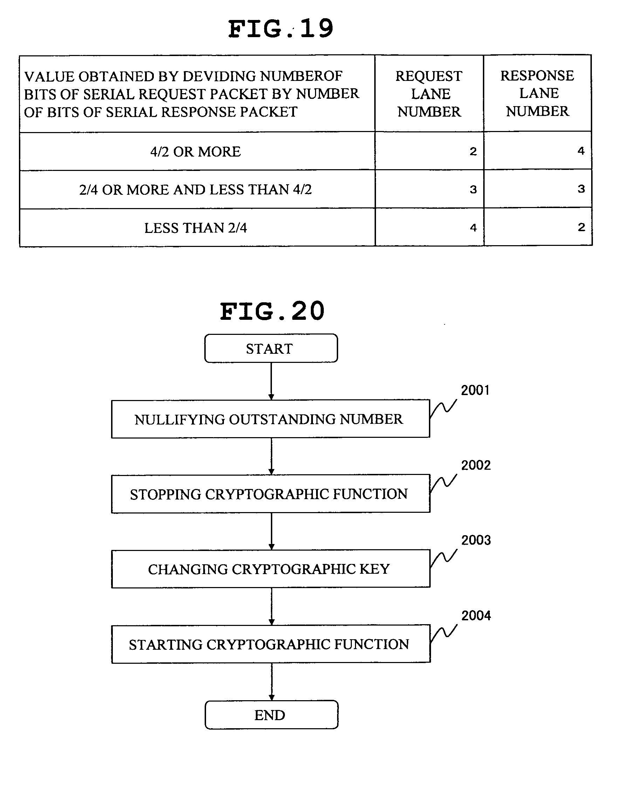

In the autonomous lane number change control, the packet counter-A 1105 of the initiator-A 105 counts the unit time amount of the number of bits which configures a serial request packet, and the unit time amount of the number of bits which configures a serial response packet. The packet counter-A 1105 divides the number of bits which configures the serial request packet by the number of bits which configures the serial response packet, and sets up the request lane number and the response lane number according to the value obtained by the division, with reference to the numerical table illustrated in FIG. 19.

When the control is performed according to the numerical table illustrated in FIG. 19, the sum of the time necessary to transfer the serial request packet and the time necessary to transfer the serial response packet can be made small.

When increasing the request lane number and decreasing the response lane number at this time, Steps S1701-S1708 illustrated in FIG. 17 are performed, and the response lane number is first decreased, and then the request lane number is increased. Similarly, when increasing the response lane number and decreasing the request lane number, Steps S1801-S1808 illustrated in FIG. 18 are performed, and the response lane number is first decreased, and then the request lane number is increased. In either case, however, the initiator-A 105 performs the processing which CPU-A 102 has performed.

In stead of referring to the numerical table of FIG. 19, it is also possible to set up the lane number from the amount of the number of bits which configures the serial request packet, and the amount of the number of bits which configures the serial response packet. For example, when the amount of the number of bits which configures the serial request packet is less than a predetermined threshold, the response lane number is not change and the request lane number is decreased, enabling it to reduce power consumption.

Finally, the following explains the procedure in changing a cryptographic key is explained with reference to FIG. 20, in order to make information secrecy of the serial interface severer.

FIG. 20 is a flow chart illustrating the processing of the cryptographic key change sequence. In advance of a cryptographic key change, CPU-A 102 stops a new parallel request packet transmission until CPU-A 102 receives all the parallel response packets to the issued parallel request packet, and thereby reducing the outstanding number of CPU-A 102 to zero (Step S2001).

Next, the integrated circuit-A 101 writes "0" to the encryption function enabling register-B, and stops the serial request packet decryption function and the serial response packet encryption function of the integrated circuit-B 109.

In the integrated circuit-A 101, CPU-A 102 writes "0" to the encryption function enabling register-A, and stops the serial request packet encryption function and the serial response packet decryption function of the integrated circuit-A 101 (Step S2002).

Next, the integrated circuit-A 101 transmits, to the integrated circuit-B 109, a serial request packet for writing a new value to the encryption key register-B and the decryption key register-B. In the integrated circuit-A 101, CPU-A 102 sets to the encryption key register-A the same value as the value written to the decryption key register-B, and sets to the decryption key register-A the same value as the value written to the encryption key register-B (Step S2003). The integrated circuit-B 109 transmits a serial response packet to the serial request packet (Step S2004).

Next, the integrated circuit-A 101 writes "1" to the encryption function enabling register-B, and enables the serial request packet decryption function and the serial response packet encryption function of the integrated circuit-B 109. In the integrated circuit-A 101, CPU-A 102 writes "1" to the encryption function enabling register-A, and enables the serial request packet encryption function and the serial response packet decryption function of the integrated circuit-A 101.

The cryptographic key can be changed by performing the above sequence, without stopping the processing of the integrated circuit-A 101 and the integrated circuit-B 109. An interruption packet can be transferred also while the series of processing described above is performed.

According to the first embodiment described above, the following features of the present invention are realizable.

First, a serial interface can be constructed at low cost with a small number of signal lines.

Second, acquiring the transmitted data on a serial interface (the access for information fetching) from the exterior can be prevented by encryption.

Third, since an unnecessary power and clock supply can be stopped, the power consumption can be suppressed. This power consumption suppression is realizable not by the integrated circuit which consumes the power but by an integrated circuit different from the present integrated circuit, as if two integrated circuits were realized as one integrated circuit.

Fourth, the transfer performance as high as the signal line allows is realizable. Furthermore, the transfer performance can be improved without the intervention of processing by software.

Fifth, by transferring interruption information in the serial interface used for read access and write access, the interface for exclusive use of interruption can be abolished, and the cost of an integrated circuit can be reduced. The interruption information can always be transferred, without being influenced by a stop and a start of the encryption function, and by the change of the cryptographic key.

Sixth, since the outstanding number can be individually specified in read access and write access, the amount of buffers mounted in the target can be made to the minimum, and the transistor accumulation cost of the integrated circuit can be lowered.

### «Second Embodiment»

Hereafter, a second embodiment of the present invention is described with reference to accompanying drawings.

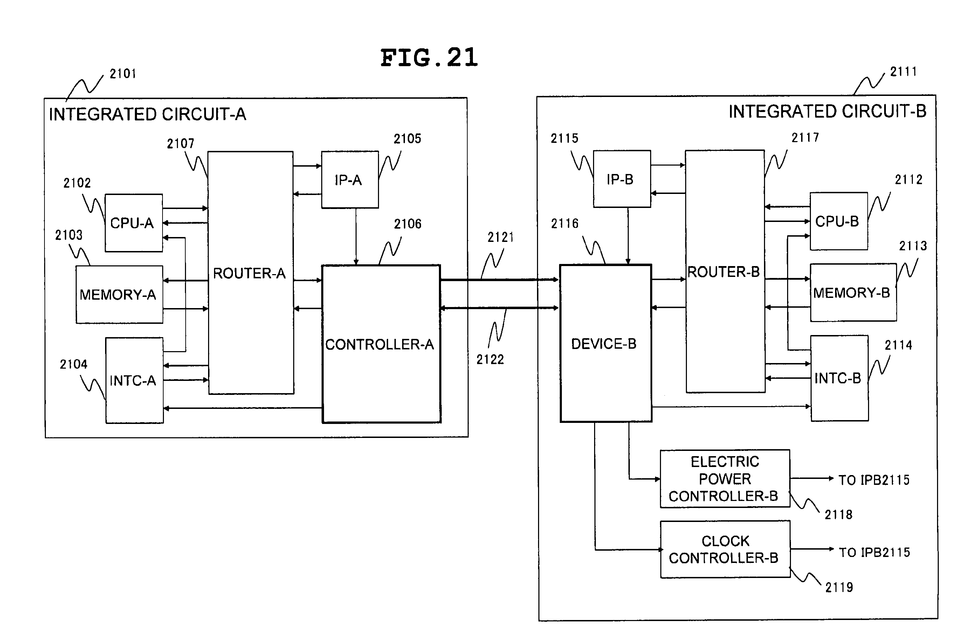

FIG. 21 is a block diagram illustrating an integrated circuit-A and an integrated circuit-B according to another embodiment of the present invention. The integrated circuit-A 2101 and the integrated circuit-B 2111 illustrated in FIG. 21 are formed on a semiconductor substrate such as single crystal silicon, employing semiconductor integrated circuit technology which forms a publicly known CMOS (a complementary MOS transistor), a bipolar transistor, etc. The present embodiment explains read access, write access, and notice of interruption between the integrated circuit-A 2101 and the integrated circuit-B 2111 according to the second embodiment of the present invention, in case that both integrated circuits access mutually as an initiator.

A signal line group-AB 2121 transmits information from the integrated circuit-A 2101 to the integrated circuit-B 2111. A signal line group-BA 2122 transmits information from the integrated circuit-B 2111 to the integrated circuit-A 2101. The signal line group-AB 2121 and the signal line group-BA 2122 are the same as the signal line group-AB 107 and the signal line group-BA 108 of the first embodiment, respectively.

First, modules included in the integrated circuit-A 2101 are explained. The integrated circuit-A 2101 includes modules of CPU-A 2102, a memory-A 2103, INTC-A 2104, IP-A 2105, a controller-A 2106, and a router-A 2107. The signal line group-AB 2121 and the signal line group-BA 2122 are coupled to the integrated circuit-A 2101.

CPU-A 2102 controls the integrated circuit-A 2101 and the integrated circuit-B 2111 by accessing the memory-A 2103 via the router-A 2107, and executing a program stored in the memory. Access within the integrated circuit-A 2101 is performed by a split protocol similarly to the access within the integrated circuit-A 101 of the first embodiment.

The memory-A 2103 receives a request packet from the router-A 2107, performs a read access or a write access according to the contents of the request packet, and transmits a response packet to the router-A 2107.

INTC-A 2104 serves as an interruption controller which takes in interruption information from the controller-A 2106 and IP-A 2105, and relays the interruption information to CPU-A 2102.

IP-A 2105 serves as IP which performs a predetermined processing by accessing the memory-A 2103 via the router-A 2107, writes the result obtained by the processing in the memory-A 2103, and further notifies the controller-A 2106 or INTC-A 2104 of the completion of the processing by an interrupt signal.

The controller-A 2106 serves as a junction circuit which relays information between the router-A 2107 and the integrated circuit-B 2111 and between INTC-A 2104 and the integrated circuit-B 2111. The controller-A 2106 is provided with the function of an initiator and a target. The controller-A 2106 performs the following processing. The controller-A 2106 receives a parallel request packet from the router-A 2107, converts the parallel request packet into a serial request packet, and transmits the serial request packet to the integrated circuit-B 2111 via the signal line group-AB 2121. The controller-A 2106 receives a parallel response packet from the router-A 2107, converts the parallel response packet into a serial response packet, and transmits the serial response packet to the integrated circuit-B 2111 via the signal line group-AB 2121. The controller-A 2106 receives a serial request packet from the integrated circuit-B 2111 via the signal line group-BA 2122, converts the serial request packet into a parallel request packet, and transmits the parallel request packet to the router-A 2107. The controller-A 2106 receives a serial response packet from the integrated circuit-B 2111 via the signal line group-BA 2122, converts the serial response packet into a parallel response packet, and transmits the parallel response packet to the router-A 2107. The controller-A 2106 takes in interruption information from IP-A 2105, and transmits the interruption information to the integrated circuit-B 2111 via the signal line group-BA 2122. The controller-A 2106 receives an interruption packet from the integrated circuit-B 2111 via the signal line group-BA 2122, generates interruption information from the interruption packet, and supplies the interruption information to INTC-A 2104.

The router-A 2107 serves as a junction circuit which relays a parallel request packet and a parallel response packet which are transmitted and received by CPU-A 2102, the memory-A 2103, INTC-A 2104, IP-A 2105, and the controller-A 2106.

Next, modules included in the integrated circuit-B 2111 are explained. The integrated circuit-B 2111 includes CPU-B 2112, a memory-B 2113, INTC-B 2114, IP-B 2115, a device-B 2116, a router-B 2117, an electric power controller-B 2118, and a clock controller-B 2119. The signal line group-AB 2121 and the signal line group-BA 2122 are coupled to the integrated circuit-B 2111. Access within the integrated circuit-B 2111 is performed in the split protocol similarly to the access within the integrated circuit-A 2101.

CPU-B 2112 controls the integrated circuit-A 2101 and the integrated circuit-B 2111 by accessing the memory-B 2113 via the router-B 2117, and executing a program stored in the memory.

The memory-B 2113 receives a request packet from the router-B 2117, performs a read access or a write access according to the contents of the request packet, and transmits a response packet to the router-B 2117.

INTC-B 2114 serves as an interruption controller which takes in interruption information from the devices-B 2116 and IP-B 2115, and relays the interruption information to CPU-B 2112.

IP-B 2115 serves as IP which performs a predetermined processing by accessing the memory-B 2113 via the router-B 2117, writes the result obtained by the processing to the memory-B 2113, and further notifies the device-B 2116 or INTC-B 2114 of the completion of the processing by an interrupt signal.

The device-B 2116 serves as a junction circuit which relays the information among the router-B 2117, INTC-B 2114, the electric power controller-B 2118, the clock controller-B 2119, and the integrated circuit-A 2101. The device-B 2116 is provided with the function of an initiator and a target. The device-B 2116 performs the following processing. The device-B 2116 receives a parallel request packet from the router-B 2117, converts the parallel request packet into a serial request packet, and transmits the serial request packet to the integrated circuit-A 2101 via the signal line group-BA 2122. The device-B 2116 receives a parallel response packet from the router-B 2117, converts the parallel response packet into a serial response packet, and transmits the serial response packet to the integrated circuit-A 2101 via the signal line group-BA 2122. The device-B 2116 receives a serial request packet from the integrated circuit-A 2101 through the signal line group-AB 2121, converts the serial request packet into a parallel request packet, and transmits the parallel request packet to the router-B 2117. The device-B 2116 receives a serial response packet from the integrated circuit-A 2101 via the signal line group-AB 2121, converts the serial response packet into a parallel response packet, and transmits the parallel response packet to the router-B 2117. The device-B 2116 takes in interruption information from IP-B 2115, and transmits the interruption information to the integrated circuit-A 2101 via the signal line group-AB 2121. The device-B 2116 receives an interruption packet from the integrated circuit-A 2101 via the signal line group-AB 2121, generates an interrupt signal based on the interruption packet, and supplies the interrupt signal to INTC-B 2114. The device-B 2116 receives a serial request packet from the integrated circuit-A 2101 through the signal line group-AB 2121, and supplies a control signal to the electric power controller-B 2118 and the clock controller-B 2119 based on the contents of the serial request packet.

The router-B 2117 serves as a junction circuit which relays a parallel request packet and a parallel response packet which are transmitted and received by CPU-B 2112, the memory-B 2113, INTC-B 2114, IP-B 2115, and the device-B 2116.

The electric power controller-B 2118 is an electric power control circuit which supplies or cuts off the power to IP-B 2115 based on the electric power supply signal supplied from the device-B 2116.

The clock controller-B 2119 is a clock control circuit which supplies or cuts off the clock to IP-B 2115 based on the clock supply signal supplied from the device-B 2116.

Next, the transfer processing between the integrated circuit-A 2101 and the integrated circuit-B 2111 is explained. Hereafter, in the present embodiment, the interface including the signal line group-AB 2121 and the signal line group-BA 2122 between the integrated circuit-A 2101 and the integrated circuit-B 2111 is called a serial interface. Access which goes through the present serial interface is performed by the split protocol explained in the first embodiment. In the present embodiment, a request packet and a response packet which are transferred on the serial interface are a serial packet explained in the first embodiment. However, in the present embodiment, the integrated circuit-A 2101 and the integrated circuit-B 2111 can operate as any of an initiator and a target.

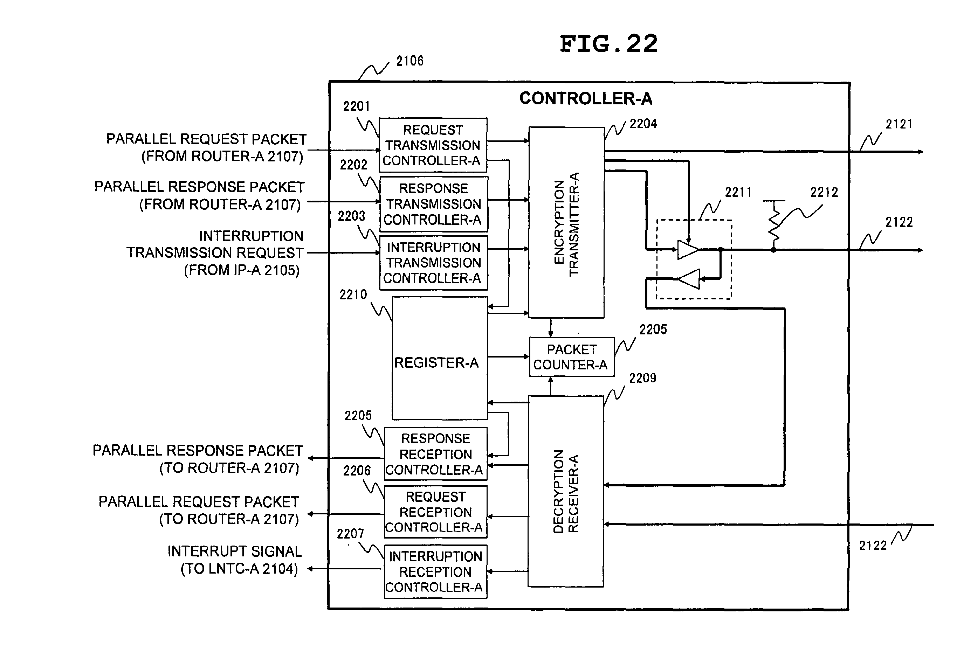

Next, the controller-A 2106 included in the integrated circuit-A 2101 is explained with reference to FIG. 22.

FIG. 22 is a block diagram illustrating the structure of the controller-A 2106. The controller-A 2106 includes a request transmission controller-A 2201, a response transmission controller-A 2202, an interruption transmission controller-A 2203, an encryption transmitter-A 2204, a response reception controller-A2205, a request reception controller-A 2206, an interruption reception controller-A 2207, a packet counter-A 2208, a decryption receiver-A 2209, a register-A 2210, a three-state buffer-A 2211, and a pull-up resistor 2212.

The request transmission controller-A 2201 serves as a junction circuit which receives a parallel request packet from the router-A 2107, transmits the parallel request packet to the register-A 2210 when the address of the parallel request packet indicates the register-A 2210, and transmits the parallel request packet to the encryption transmitter-A 2204 when the address of the parallel request packet does not indicate the register-A 2210.

The response transmission controller-A 2202 serves as a junction circuit which receives a parallel response packet from the router-A 2107, and transmits the parallel response packet to the encryption transmitter-A 2204.

The interruption transmission controller-A 2203 serves as an interruption information junction circuit which takes in an interruption transmission request from IP-A 2105, generates an interruption packet based on the interruption transmission request, and transmits the interruption packet to the encryption transmitter-A 2204.

The encryption transmitter-A 2204 serves as a junction circuit which receives a parallel request packet from the request transmission controller-A 2201, converts the parallel request packet into a serial request packet, encrypts the serial request packet, and transmits the serial request packet encrypted to the integrated circuit-B 2111 via the signal line group-AB 2121. The encryption transmitter-A 2204 serves as a junction circuit which receives a parallel response packet from the response transmission controller-A 2202 and the interruption transmission controller-A 2203, converts the parallel response packet into a serial response packet, encrypts the serial response packet, and transmits the serial response packet encrypted to the integrated circuit-B 2111 via the signal line group-AB 2121. Furthermore, the encryption transmitter-A 2204 serves as an interruption junction circuit which receives an interruption packet from the interruption transmission controller-A 2203, and transmits the interruption packet to the integrated circuit-B 2111 via the signal line group-AB 2121.

The encryption transmitter-A 2204 performs the following processing at the time of execution of the transfer processing. The encryption transmitter-A 2204 does not transmit a serial request packet to the integrated circuit-B 2111, when the request packet transmission enabling signal supplied from the packet counter-A 2208 is in a deassertion state. Whenever the transmission of the serial request packet to the integrated circuit-B 2111 is completed, the encryption transmitter-A 2204 notifies the packet counter-A 2208 of the fact that the transmission of the serial request packet has been completed and the value of rw field of the serial request packet transmitted. Referring to a down lane number register-A described later, the encryption transmitter-A 2204 transmits a serial packet using the information signal line group which is included in the signal line group-AB 2121 and possesses the number of signal lines specified by the value of the down lane number register-A. Referring to the value of an encryption function enabling register-A (described later), and the value of an encryption key register-A (described late), respectively, the encryption transmitter-A 2204 encrypts the serial request packet and the serial response packet using the cryptographic key specified by the encryption key register-A, when the value of the encryption function enabling register-A indicates that the encryption function is enabled.

The response reception controller-A 2205 serves as a junction circuit which receives a parallel response packet from the decryption receiver-A 2209, and transmits the parallel response packet to the router-A 2107.

The request reception controller-A 2206 serves as a junction circuit which receives a parallel request packet from the decryption receiver-A 2209, and transmits the parallel request packet to the router-A 2107.

The interruption reception controller-A 2207 serves as an interruption information junction circuit which receives an interruption packet from the decryption receiver-A 2209, analyzes the contents of the interruption packet, and generates an interrupt signal to INTC-A 2104 based on the analysis result.

The decryption receiver-A 2209 serves as a junction circuit which receives a serial packet from the integrated circuit-B 2111 via the signal line group-BA 2122, and transmits the serial packet to the response reception controller-A 2205, the request reception controller-A 2206, the interruption reception controller-A 2207, and the register-A 2210. The decryption receiver-A 2209 performs the following processing during the time of relaying the serial packet.

The decryption receiver-A 2209 analyzes the contents of the serial packet received from the integrated circuit-B 2111, and determines whether the present serial packet is a serial request packet, a serial response packet, or an interruption packet. When the serial packet received from the integrated circuit-B 2111 is determined to be a serial response packet, the decryption receiver-A 2209 decrypts the serial response packet, generates a parallel response packet, and transmits the parallel response packet to the response reception controller-A 2205. When the serial packet received from the integrated circuit-B 2111 is determined to be a serial request packet, the decryption receiver-A 2209 decrypts the serial request packet, and generates a parallel request packet. The decryption receiver-A 2209 further analyzes the contents of the parallel request packet to determine whether the present parallel request packet includes the access request to the register-A 2210 or the present parallel request packet includes the access request to the memory-A 2103 or to IP-A 2105. When the parallel request packet includes the access request to the register-A 2210, the decryption receiver-A 2209 transmits the parallel request packet to the register-A 2210, and when the parallel request packet includes the access request to the memory-A 2103 or to IP-A 2105, the decryption receiver-A 2209 transmits the parallel request packet to the request reception controller-A 2206. When the packet received from the integrated circuit-B 109 is an interruption packet, the decryption receiver-A 2209 transmits the interruption packet to the interruption reception controller-A 2207.

The packet counter-A 2208 is provided with an outstanding counter-A and a read outstanding counter-A, and a write outstanding counter-A, and serves as a control circuit which generates the serial request packet transmission enabling signal to the encryption transmitter-A 2204 with reference to the value of the present counters.

The outstanding counter-A increments the count value by one, whenever the outstanding counter-A is notified by the encryption transmitter-A 2204 that the transmission of the serial request packet has been completed. The outstanding counter-A decrements the count value by one, whenever the outstanding counter-A is notified by the decryption receiver-A 2209 that the reception of the serial response packet has been completed. However, the outstanding counter-A does not change the count value, when the transmission of the serial request packet and the reception of the serial response packet are completed at the same time. The outstanding counter-A is set to "0" at the time of initialization of the integrated circuit-A 2101.

The read outstanding counter-A increments the count value by one, whenever the read outstanding counter-A is notified by the encryption transmitter-A 2204 that the transmission of the serial request packet whose rw field is "1" has been completed. The read outstanding counter-A decrements the count value by one, whenever the read outstanding counter-A is notified by the decryption receiver-A 2209 that the reception of the serial response packet corresponding to the serial request packet has been completed. However, the read outstanding counter-A does not change the count value, when the transmission of the serial request packet whose rw field is "1", and the reception of the serial response packet corresponding to the present serial request packet have been performed at the same time. The read outstanding counter-A is set to "0" at the time of initialization of the integrated circuit-A 2101.

The write outstanding counter-A increments the count value by one, whenever the write outstanding counter-A is notified by the encryption transmitter-A 2204 that the transmission of the serial request packet whose rw field is "0" has been completed. The write outstanding counter-A decrements the count value by one, whenever the write outstanding counter-A is notified by the decryption receiver-A 2209 that the reception of the serial response packet corresponding to the serial request packet has been completed. However, the write outstanding counter-A does not change the count value, when the transmission of the serial request packet whose rw field is "0", and the reception of the serial response packet corresponding to the serial request packet have been performed at the same time. The write outstanding counter-A is set to "0" at the time of initialization of the integrated circuit-A 2101.

The packet counter-A 2208 refers to the value of a maximum outstanding register-A (described later), the value of a maximum read outstanding register-A (described later), and the value of a maximum write outstanding register-A (described later). The packet counter-A 2208 holds the serial request packet transmission enabling signal to the encryption transmitter-A 2204 in an assertion state, when the value of the maximum outstanding register-A is larger than the value of the outstanding counter-A, and when the value of the maximum read outstanding register-A is larger than the value of the read outstanding counter-A, and when the value of the maximum write outstanding register-A is larger than the value of the write outstanding counter-A.

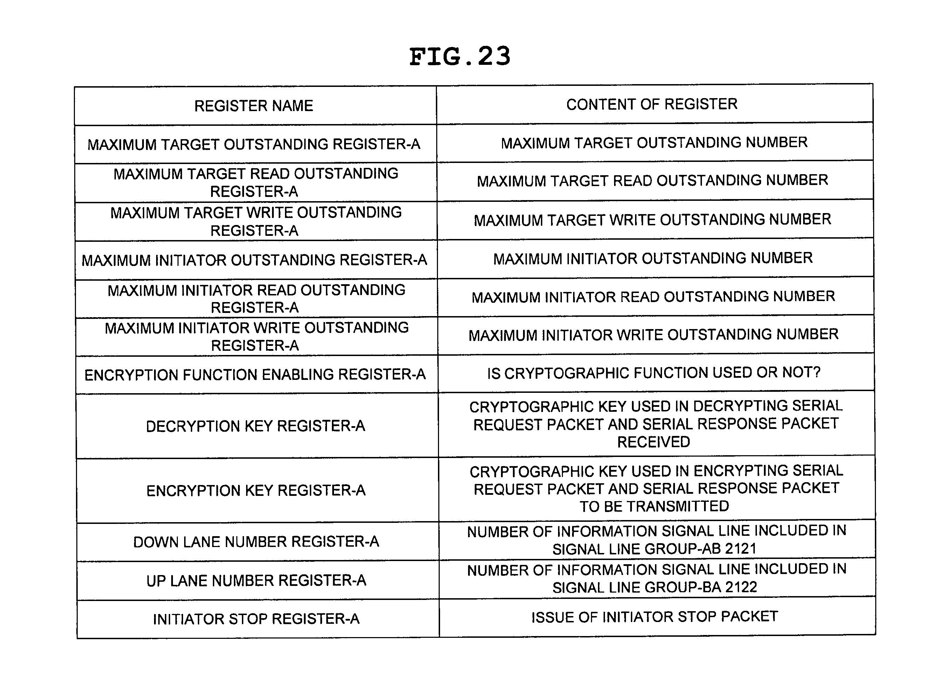

Next, the register group included in the register-A 2210 is explained with reference to FIG. 23. FIG. 23 is a chart illustrating the register group included in the register-A 2210.

The register-A 2210 includes a maximum target outstanding register-A, a maximum target read outstanding register-A, a maximum target write outstanding register-A, a maximum initiator outstanding register-A, a maximum initiator read outstanding register-A, a maximum initiator write outstanding register-A, an encryption function enabling register-A, a decryption key register-A, an encryption key register-A, a down lane number register-A, and an up lane number register-A.

The maximum target outstanding register-A holds the maximum outstanding number which the controller-A 2106 supports as a target. The value of the maximum target outstanding register-A is set to "1" at the time of initialization of the integrated circuit-A 2101, and is updated by the write access. The maximum target read outstanding register-A holds the maximum outstanding number of the read access which the controller-A 2106 supports as a target. The value of the maximum target read outstanding register-A is set to "1" at the time of initialization of the integrated circuit-A 2101, and is updated by the write access by CPU-A 2102. The maximum target write outstanding register-A holds the maximum outstanding number of the write access which the controller-A 2106 supports as a target. The value of the maximum target write outstanding register-A is set to "1" at the time of initialization of the integrated circuit-A 2101, and is updated by the write access by CPU-A 2102. The maximum initiator outstanding register-A holds the maximum outstanding number which the controller-A 2106 supports as an initiator. The value of the maximum initiator outstanding register-A is set to "1" at the time of initialization of the integrated circuit-A 2101, and is updated by the write access by CPU-A 2102. The maximum initiator read outstanding register-A holds the maximum outstanding number of the read access which the controller-A 2106 supports as an initiator. The value of the maximum initiator read outstanding register-A is set to "1" at the time of initialization of the integrated circuit-A 2101, and is updated by the write access by CPU-A 2102. The maximum initiator write outstanding register-A holds the maximum outstanding number of the write access which the controller-A 2106 supports as an initiator. The value of the maximum initiator write outstanding register-A is set to "1" at the time of initialization of the integrated circuit-A 2101, and is updated by the write access by CPU-A 2102.

The encryption function enabling register-A sets up a value indicating whether a serial request packet and a serial response packet, which the controller-A 2106 transmits and receives, are to be encrypted or not. When the value of the encryption function enabling register-A is "1", the serial request packet and the serial response packet are encrypted and transmitted on the signal line group-AB 2121 and the signal line group-BA 2122, respectively.

The decryption key register-A holds a cryptographic key to be used when the decryption receiver-A 2209 decrypts a packet. The encryption key register-A holds a cryptographic key to be used when the encryption transmitter-A 2204 encrypts a packet.

The down lane number register-A indicates the number of the information signal line group included in the signal line group-AB 2121. The value of the down lane number register-A is set to "1" at the time of initialization of the integrated circuit-A 2101, and is updated by the write access by CPU-A 2102.

The up lane number register-A indicates the number of the information signal line group included in the signal line group-BA 2122. The value of the up lane number register is set to "1" at the time of initialization of the integrated circuit-A 2101, and is updated by the write access by CPU-A 2102.

The initiator stop register-A transmits an initiator stop packet serving as a serial control packet which makes the controller-A stop the initiator function of the integrated circuit-B 2111 and sets the outstanding number of the initiator of the integrated circuit-B 2111 to zero. The initiator stop register-A also transmits an initiator stop canceling packet which resumes the operation of the initiator of the integrated circuit-B 2111. When value 1 is written to the initiator stop register-A, the register-A 2210 transmits an initiator stop packet to the encryption transmitter-A 2204, and when value 0 is written to the initiator stop register-A, the register-A 2210 transmits an initiator stop canceling packet to the encryption transmitter-A 2204.

The three-state buffer-A 2111 possesses the same function as the three-state buffer 201 in the first embodiment, and switches the direction of the information signal line group included in the signal line group-AB 2121 or in the signal line group-BA 2122.

The pull-up resistor 2212 fixes the potential of the information signal line group to a HIGH level, when the information signal line group included in the signal line group-AB 2121 or the signal line group-BA 2122 is not driven by any one of the integrated circuit-A 2101 and the integrated circuit-B 2111.

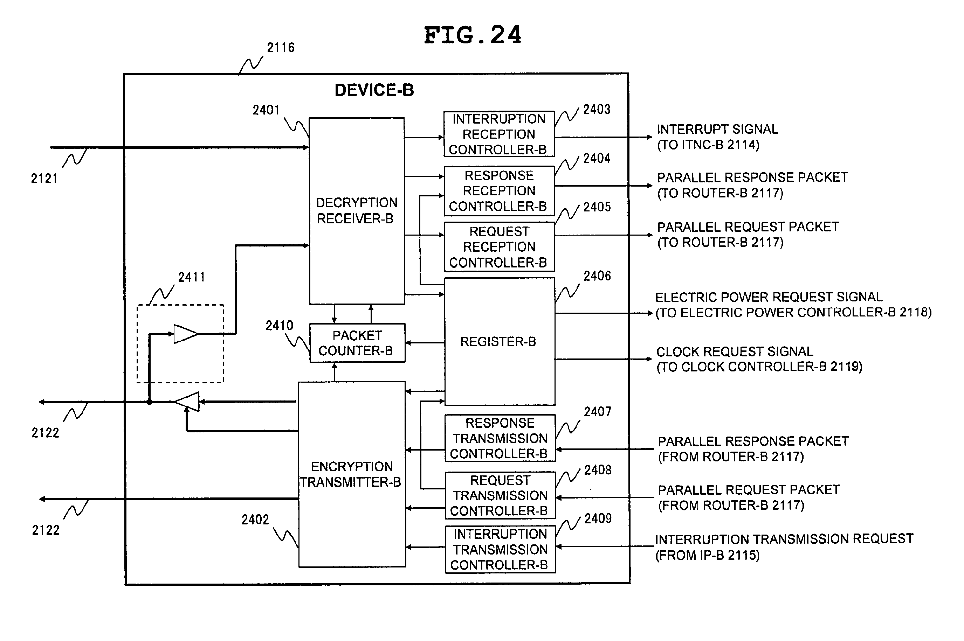

Next, the device-B 2116 is explained with reference to FIG. 24.

FIG. 24 is a block diagram illustrating the structure of the device-B 2116. The device-B 2116 includes a decryption receiver-B 2401, an encryption transmitter-B 2402, an interruption reception controller-B 2403, a response reception controller-B 2404, a request reception controller-B 2405, a register-B 2406, a response transmission controller-B 2407, a request transmission controller-B 2408, an interruption transmission controller-B 2409, a packet counter-B 2410, and a three-state buffer-B 2411.

The decryption receiver-B 2401 serves as a junction circuit which receives a serial packet from the integrated circuit-A 2101 via the signal line group-AB 2121 and transmits the serial packet to the interruption reception controller-B 2403, the response reception controller-B 2404, the request reception controller 2405, and the register-B 2406. The decryption receiver-B 2401 performs the following processing during the time of execution of the transfer processing.

Referring to the value of the request lane number register-B (described later), the decryption receiver-B 2401 receives a serial packet via the information signal line group which is included in the signal line group-AB 2121 and possesses the number of signal lines specified by the register. The decryption receiver-B 2401 analyzes the serial packet received, and determines whether the serial packet is a serial request packet, a serial response packet, or a serial control packet. The decryption receiver-B 2401 refers to the value of a decryption key register-B (described later) and the value of an encryption function enabling register-B (described later), respectively. When the value of the encryption function enabling register-B indicates that the encryption function is enabled, the decryption receiver-B 2401 decrypts a serial request packet and a serial response packet using a cryptographic key specified by the register-B. When the serial packet received is a serial response packet, the decryption receiver-B 2401 converts the serial response packet into a parallel response packet and transmits the parallel response packet to the response reception controller-B 2404. When the packet received from the integrated circuit-A 2101 is a serial request packet, the decryption receiver-B 2401 decrypts the serial request packet and generates a parallel request packet. The decryption receiver-B 2401 analyzes the address of the parallel request packet. When the parallel request packet is a parallel request packet including the access request to the register-B 2406, the decryption receiver-B 2401 transmits the parallel request packet to the register-B 2406. The decryption receiver-B 2401 analyzes the address of the present parallel request packet. When the parallel request packet is a parallel request packet including the access request to the memory-B 2113 or IP-B 2115, the decryption receiver-B 2401 transmits the parallel request packet to the request reception controller-B 2405. When the serial packet received is an interruption packet, the decryption receiver-B 2401 transmits the serial control packet to the interruption reception controller-B 2403. When the serial packet received is an initiator stop packet or an initiator stop canceling packet, the decryption receiver-B 2401 transmits the initiator stop packet or the initiator stop canceling packet to the register-B 2406.

The encryption transmitter-B 2402 serves as a junction circuit which receives a parallel request packet from the request transmission controller-B 2408, a parallel response packet from the response transmission controller-B 2407 and the register-B 2406, and an interruption packet from the interruption transmission controller-B 2409, and transmits these received packets to the integrated circuit-A 2101 via the signal line group-BA 2122. The encryption transmitter-B 2402 performs the following processing during the time of execution of the transfer processing. The encryption transmitter-B 2402 converts the parallel request packet received into a serial request packet, and converts the parallel response packet received into a serial response packet, respectively. The encryption transmitter-B 2402 does not transmits the serial request packet to the integrated circuit-A 2101, when the serial request packet transmission enabling signal supplied from the packet counter-B 2410 is in a deassertion state. Whenever the transmission of the serial request packet to the integrated circuit-A 2101 is completed, the encryption transmitter-B 2402 notifies the packet counter-B 2410 of the fact that the transmission of the serial request packet has been completed and the value of rw field of the serial request packet transmitted. Referring to an up lane number register-B (described later), the encryption transmitter-B 2402 transmits a serial packet using the information signal line group which is included in the signal line group-BA 2122 and possessing the number of signal lines specified by the value of the lane number register. Referring to the value of an encryption function enabling register-B (described later) and the value of an encryption key register-B (described later), respectively, the encryption transmitter-B 2402 encrypts a serial request packet and a serial response packet using the cryptographic key specified by the encryption key register-A, when the value of the encryption function enabling register-B indicates that the encryption function is enabled.

The interruption reception controller-B 2403 serves as an interruption information junction circuit which receives an interruption packet from the decryption receiver-B 2401, analyzes the contents of the interruption packet, and generates an interrupt signal to INTC-B 2114 based on the analysis result.

The response reception controller-B 2404 serves as a junction circuit which receives a parallel response packet from the decryption receiver-B 2401, and transmits the parallel response packet to the router-B 2117.

The request reception controller-B 2405 serves as a junction circuit which receives a parallel request packet from the decryption receiver-B 2401, and transmits the parallel request packet to the router-B 2117.

The register-B 2406 holds control information necessary in order that the integrated circuit-B 2111 may communicate with the integrated circuit-A 2101 via the serial interface. The register-B 2406 analyzes a parallel request packet and a serial control packet which are received from the request reception controller-B 2405. The register-B 2406 performs the processing to each register (described later) based on the analysis result, generates a parallel response packet based on the processing result, and transmits the parallel response packet to the encryption transmitter-B 2402. The register-B 2406 asserts the initiator stop signal to the encryption transmitter-B 2402, when an initiator stop request is received. The register-B 2406 deasserts the initiator stop signal, when an initiator stop canceling request is received. When an initiator stop request is received, the register-B 2406 refers to the count value of an outstanding counter-B (described later), and delays transmission of the parallel response packet to the initiator stop request until the count value decreases to "0."

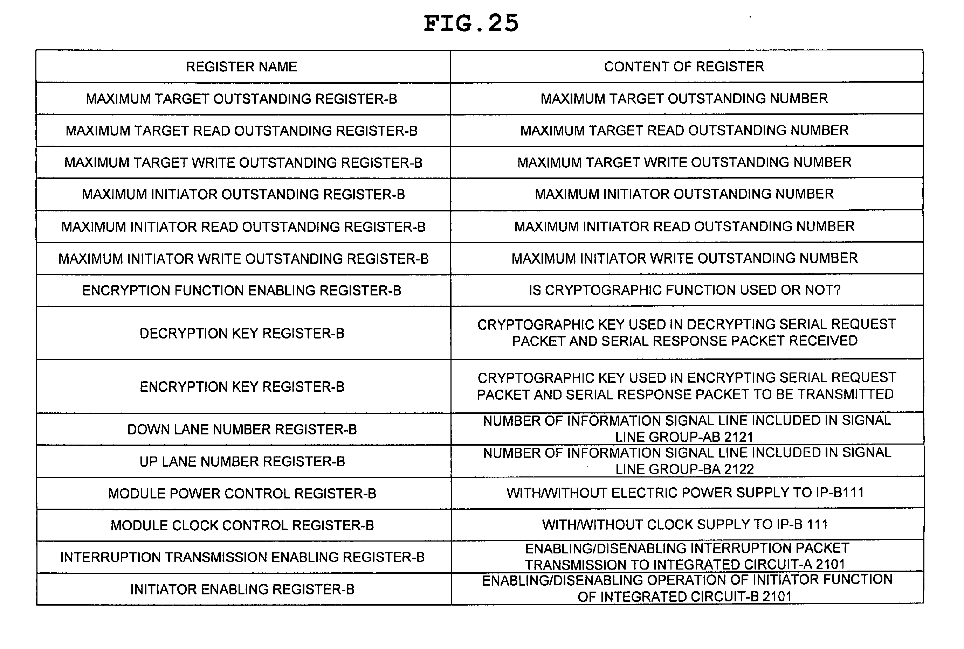

Next, the register group included in the register-B 2406 is explained with reference to FIG. 25.

FIG. 25 is a chart illustrating the register group included in the register-B 2406. The register-B 2406 includes a maximum target outstanding register-B, a maximum target read outstanding register-B, a maximum target write outstanding register-B, a maximum initiator outstanding register-B, a maximum initiator read outstanding register-B, a maximum initiator write outstanding register-B, an encryption function enabling register-B, a decryption key register-B, an encryption key register-B, a down lane number register-B, an up lane number register-B, a module power control register-B, a module clock control register-B, an interruption transmission enabling register-B, and an initiator enabling register-B.

The maximum target outstanding register-B holds the maximum outstanding number to which the device-B 2116 can respond as a target. The value of the maximum target outstanding register-B is set to "1" at the time of initialization of the integrated circuit-B 2111, and is updated by the write access by the integrated circuit-A 2101. However, when the value of the write data of the present write access is equal to or grater than "5", the value of the maximum outstanding register-B is not updated, but an access failure is notified to the encryption transmitter-B 2402.

The maximum target read outstanding register-B holds the maximum outstanding number of the read access to which the device-B 2116 can respond as a target. The value of the maximum target read outstanding register-B is set to "1" at the time of initialization of the integrated circuit-B 2111, and is updated by the write access by the integrated circuit-A 2101. However, when the value of the write data is equal to or greater than "5", the value of the maximum target read outstanding register-B is not updated, but an access failure is notified to the encryption transmitter-B 2402.

The maximum target write outstanding register-B holds the maximum outstanding number of the write access to which the device-B 2116 can respond as a target. The value of the maximum target write outstanding register-B is set to "1" at the time of initialization of the integrated circuit-B 2111, and is updated by the write access by the integrated circuit-A 2101. However, when the value updated by the write access is equal to or greater than "5", the value of the maximum write outstanding register-B is not updated, but an access failure is notified to the encryption transmitter-B 2402.

The maximum initiator outstanding register-B holds the maximum outstanding number which the device-B 2116 practices as an initiator. The value of the maximum initiator outstanding register-B is set to "1" at the time of initialization of the integrated circuit-B 2111, and a value is updated by the write access by the integrated circuit-A 2101.

The maximum initiator read outstanding register-B holds the maximum outstanding number of the read access which the device 2116 practices as an initiator. The value of the maximum initiator read outstanding register-B is set to "1" at the time of initialization of the integrated circuit-B 2111, and a value is updated by the write access by the integrated circuit-A 2101.

The maximum initiator write outstanding register-B holds the maximum outstanding number of the write access which the device-B 2116 practices as an initiator. The value of the maximum initiator write outstanding register-B is set to "1" at the time of initialization of the integrated circuit-B 2111, and a value is updated by the write access by the integrated circuit-A 2101.

The encryption function enabling register-B sets up a value indicating whether a serial request packet and a serial response packet, which the device-B 2116 transmits and receives, are to be encrypted or not. When the value of the encryption function enabling register-B is "1", the serial request packet and the serial response packet are encrypted, and transmitted and received on the serial interface, respectively.

The decryption key register-B holds a cryptographic key to be used when the decryption receiver-B 2401 decrypts a packet.

The encryption key register-B holds a cryptographic key to be used when the encryption transmitter-B 2402 encrypts a serial request packet and a serial response packet.

The down lane number register-B indicates the number of the information signal line group included in the signal line group-AB 2121. The value of the down lane number register is set to "1" at the time of initialization of the integrated circuit-B 2111, and is updated by the write access by the integrated circuit-A 2101.

The up lane number register indicates the number of the information signal line group included in the signal line group-BA 2122. The value of the up lane number register is set to "1" at the time of initialization of the integrated circuit-B 2111, and is updated by the write access by the integrated circuit-A 2101.

The module power control register-B indicates whether an electric power supply is performed or not to IP-B 2115. When the value of the module power control register-B is "1", the electric power supply signal to the electric power controller-B 2118 is held in an assertion state, and when the value of the module power control register-B is "0", the electric power supply signal to the electric power controller-B 2118 is held in a deassertion state. The value of the module power control register-B is set to "1" at the time of initialization of the integrated circuit-B 2111, and is updated by the write access.

The module clock control register-B indicates whether a clock supply is performed or not to IP-B 2115. When the value of the module clock control register-B is "1", the clock supply signal to the clock controller-B 2119 is held in an assertion state. When the value of the module clock control register-B is "0", the clock supply signal to the clock controller-B 2119 is held in a deassertion state. The value of the module clock control register-B is set to "1" at the time of initialization of the integrated circuit-B 2111, and is updated by the write access.

The interruption transmission enabling register-B indicates whether the interruption packet transmission to the integrated circuit-A 2101 is permitted or not. When the value of the interruption transmission enabling register-B is "0", the interruption packet transmission to the integrated circuit-A 2101 is prohibited, and when the value of the interruption transmission enabling register-B is "1", the interruption packet transmission to the integrated circuit-A 2101 is permitted. The value of the interruption transmission enabling register-B is set to "0" at the time of initialization of the integrated circuit-B 109, and is updated by the write access.

The initiator enabling register-B indicates whether the integrated circuit-B 2111 is permitted or not to operate as an initiator of the serial interface. When the value of the initiator enabling register-B is "1", the integrated circuit-B 2111 is permitted to operate as an initiator of the serial interface. When the value of the initiator enabling register-B is "0", the integrated circuit-B 2111 is not permitted to operate as an initiator of the serial interface. The value of the initiator enabling register-B is set to "0" at the time of initialization of the integrated circuit-B 2111, and is updated by the write access.

The response transmission controller-B 2407 serves as a junction circuit which receives a parallel response packet from the router-B 2117, and transmits the parallel response packet to the encryption transmitter-B 2402.

The request transmission controller-B 2408 serves as a junction circuit which receives a parallel request packet from the router-B 2117, and transmits the parallel request packet to the encryption transmitter-B 2402.

The interruption transmission controller-B 2409 serves as an interruption junction circuit which takes in an interruption transmission request from IP-B2115, generates an interruption packet based on the interruption transmission request, and transmits the interruption packet to the encryption transmitter-B 2402.

The format of the interruption packet according to the present embodiment is the same as the format of the interruption packet according to the first embodiment.

The packet counter-B 2410 includes an outstanding counter-B, a read outstanding counter-B, and a write outstanding counter-B. The packet counter-B 2410 serves as a control circuit which generates a serial request packet transmission enabling signal to the encryption transmitter-B 2402 with reference to the value of the present counters.

Whenever the outstanding counter-B is notified by the encryption transmitter-B 2402 that the transmission of the serial request packet has been completed, the outstanding counter-B increments the count value by one. Whenever the outstanding counter-B is notified by the decryption receiver-B 2401 that the reception of the serial response packet has been completed, the outstanding counter-B decrements the count value by one. However, the outstanding counter-B does not change the count value, when the transmission of the serial request packet and the reception of the serial response packet are completed at the same time. The outstanding counter-B is set to "0" at the time of initialization of the integrated circuit-B 2111.

Whenever the read outstanding counter-B is notified by the encryption transmitter-B 2402 that the transmission of the serial request packet whose rw field is "1" has been completed, the read outstanding counter-B increments the count value by one. Whenever the read outstanding counter-B is notified by the decryption receiver-B 2401 that the reception of the serial response packet corresponding to the serial request packet has been completed, the read outstanding counter-B decrements the count value by one. However, the read outstanding counter-B does not change the count value, when the transmission of the serial request packet whose rw field is "1", and the reception of the serial response packet corresponding to the present serial request packet are performed at the same time. The read outstanding counter-B is set to "0" at the time of initialization of the integrated circuit-B 2111.

Whenever the write outstanding counter-B is notified by the encryption transmitter-B 2402 that the transmission of the serial request packet whose rw field is "0" has been completed, the write outstanding counter-B increments the count value by one. Whenever the write outstanding counter-B is notified by the decryption receiver-B 2401 that the reception of the serial response packet corresponding to the serial request packet has been completed, the write outstanding counter-B decrements the count value by one. However, the write outstanding counter-B does not change the count value, when the transmission of the serial request packet whose rw field is "0", and the reception of the serial response packet corresponding to the present serial request packet are performed at the same time. The write outstanding counter-B is set to "0" at the time of initialization of the integrated circuit-B 2111.

The packet counter-B 2410 refers to the value of the maximum outstanding register-B, the value of the maximum read outstanding register-B, and the value of the maximum write outstanding register-B. The packet counter-B 2410 holds the serial request packet transmission enabling signal to the encryption transmitter-B 2402 in an assertion state, when the value of the maximum outstanding register-B is larger than the value of the outstanding counter, and when the value of the maximum read outstanding register-B is larger than the value of the read outstanding counter, and when the value of the maximum write outstanding register-B is larger than the value of the write outstanding counter. However, the packet counter-B 2410 holds the serial request packet transmission enabling signal in a deassertion state, when the initiator stop signal is asserted.

The three-state buffer-B 2411 possesses the same function as the three-state buffer 202 according to the first embodiment, and switches the direction of the information signal line group included in the signal line group-AB 2121 or in the signal line group-BA 2122.

The following explains access and interruption processing which are practiced between the integrated circuit-A 2101 and the integrated circuit-B 2111, using the serial interface by the present invention.

First, initialization of the serial interface in the second embodiment is explained with reference to the accompanying drawings.

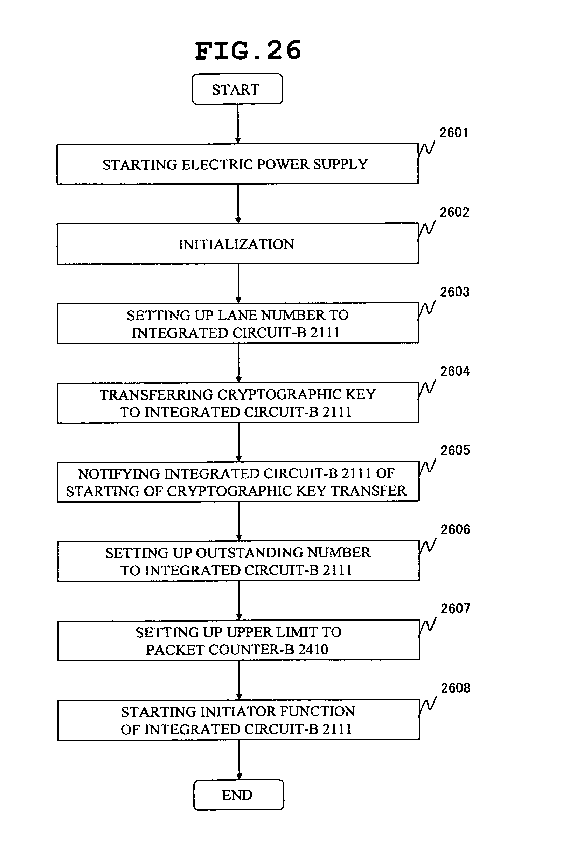

FIG. 26 is a flow chart which illustrates a series of initialization processing from the beginning of using of the integrated circuit-A 2101 and the integrated circuit-B 2111 to the completion of initialization of the serial interface. At the beginning of using of the integrated circuit-A 2101 and the integrated circuit-B 2111, the power is supplied to the integrated circuit-A 2101 and the integrated circuit-B 2111 (Step S2601) and initialization is successively performed using a reset signal etc. (Step S2602).

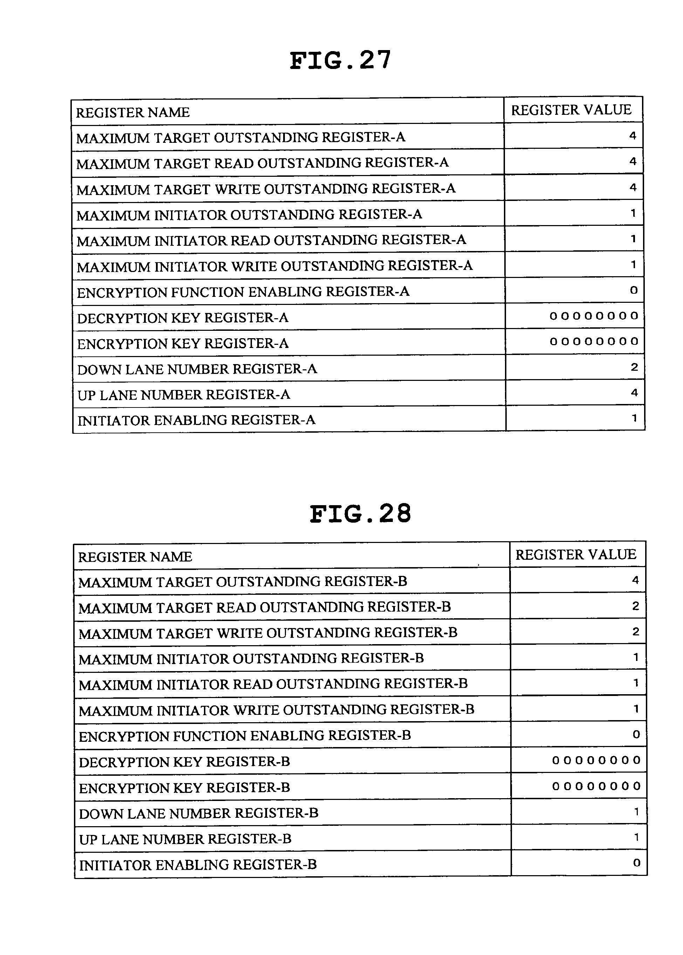

At the time of completion of Step S2602, the value of each register included in the register-A 2210 is shown in FIG. 27, and the value of each register included in the register-B 2406 is shown in FIG. 28, respectively.

Each value of the maximum target outstanding register-B, the maximum target read outstanding register-B, and the maximum target write outstanding register-B is "1", indicating that the integrated circuit-B 2111 can receive read access or write access once at the maximum as a target of the serial interface. Namely, in this state, when the integrated circuit-B 2111 receives one serial request packet from the integrated circuit-A 2101, it is not guaranteed that the integrated circuit-B 2111 can process normally the next serial request packet transmitted by the integrated circuit-A 2101, until the integrated circuit-B 2111 finishes transmitting a serial response packet to the present serial request packet.

The value of the encryption function enabling register-B indicates that a packet is not encrypted. The down lane number register-B indicates that the lane number of the down lane is "1", and the up lane number register-B indicates that the lane number of the up lane is "1."

The value of the initiator enabling register-B is "0", indicating that the integrated circuit-B 2111 is prohibited from practicing access as an initiator of the serial interface. Each value of the maximum target outstanding register-A, the maximum target read outstanding register-A, and the maximum target write outstanding register-A is "4", indicating that the integrated circuit-A 2111 can receive read access or write access 4 times at the maximum as a target of the serial interface. Namely, in this state, when the integrated circuit-A 2101 receives four serial request packets from the integrated circuit-B 2111, it is not guaranteed that the integrated circuit-A 2101 can process normally the next serial request packet transmitted by the integrated circuit-B 2111, until the integrated circuit-A 2101 finishes transmitting a serial response packet to the present serial request packet.

The value of the encryption function enabling register-A indicates that a packet is not encrypted. The up lane number register-A indicates that the lane number of the up lane is "1", and the down lane number register-A indicates that the lane number of the down lane is "1."

In this state, the transfer capacity between the integrated circuit-A 2101 and the integrated circuit-B 2111 is low, and it is difficult to prevent the access for information fetching from the outside by encryption. Furthermore, the integrated circuit-B 2111 cannot access as an initiator to the integrated circuit-A 2101. Therefore, each processing illustrated from Step S2603 to Step S2608 is practiced to enhance the transfer capacity, to prevent the access for information fetching from the outside, and resultantly, to enable the integrated circuit-B 2111 to practice access to the integrated circuit-A 2101.

First, the integrated circuit-A 2101 sets the number of the up lane and the down lane to the integrated circuit-B 2111 and the controller-A 2105, and improves the packet transfer capability of the serial interface.

In the present embodiment, the number of the information signal line groups included in the signal line group-AB 2121 and the signal line group-BA 2122 is "2" and "4", respectively. Therefore, the integrated circuit-A 2101 writes value 2 to the down lane number register of the register-B 2406 and value 4 to the up lane number register by the write access, respectively, and notifies to the integrated circuit-B 2111 that the number of the information signal line groups of the signal line group-AB 2121 is "2", and that the number of the information signal line groups of the signal line group-BA 2122 is "4."

In the integrated circuit-A 2101, CPU-A 2102 writes value 2 to the down lane number register-A of the register-A 2210, and value 4 to the up lane number register-A, respectively, and notifies to the controller-A 2116 that the number of the information signal line groups of the signal line group-AB 2121 is "2", and that the number of the information signal line groups of the signal line group-BA 2122 is "4" (Step S2603).

Next, the encryption function mounted in the integrated circuit-A 2101 and the integrated circuit-B 2111 is validated, and the access for information fetching from the outside is prevented.

First, the integrated circuit-A 2101 carries out a third write access to write a value of 32 bits to the decryption key register-B of the register-B 2406 and a fourth write access to write a value of 32 bits to the encryption key register-B, respectively, and supplies a cryptographic key to the integrated circuit-B 2111. In the present embodiment, "01234567" (hexadecimal) and "89ABCDEF" (hexadecimal) are written to the decryption key register-B and the encryption key register-B, respectively. The integrated circuit-A 2101 writes a value "01234567" (hexadecimal) to the encryption key register-A of the register-A 2210 after the completion of the third write access, and a value "89ABCDEF" (hexadecimal) to the decryption key register-A of the register-A 2210 after the completion of the fourth write access (Step S2604).

Next, the integrated circuit-A 2101 carries out the fifth write access to writes "1" to the encryption enabling register-B of the register-B 2410. CPU-A 2102 writes "1" to the encryption enabling register-A of the register-A 2210 after completion of the fifth write access (Step S2605).

Next, the outstanding upper limit number is increased to improve the access receiving capacity and access execution capacity of the integrated circuit-B 2111, and also to improve the transfer capacity of the serial interface.

The integrated circuit-A 2101 performs the first, second, and third read access to read out the value of the maximum target outstanding register-B, the maximum target read outstanding register-B, and the maximum target write outstanding register-B, and obtains value 4, value 2, and value 2 from each register, respectively. The integrated circuit-A 2101 sets these numeric values to the maximum initiator outstanding register-A, the maximum initiator read outstanding register-A, and the maximum initiator write outstanding register-A of the register-A 2210, respectively, thereby improving the access execution capacity of the integrated circuit-A 2101 as an initiator.

The integrated circuit-A 2101 sets, respectively, value 4 read out from the maximum target outstanding register-A of the register-A 2210 to the maximum initiator outstanding register-B, value 4 read out from the maximum target read outstanding register-A to the maximum initiator read outstanding register-B, and value 4 read out from the maximum target write outstanding register-A to the maximum initiator write outstanding register-B, thereby improving the access execution capacity of the integrated circuit-B 2111 as an initiator (Step S2606). As the final processing of the initialization sequence, the integrated circuit-A 2101 writes value 1 to the initiator functional enabling register-B, enabling the integrated circuit-B 2111 to carry out access as an initiator (Step S2607).

By the description given above, the initialization sequence of the second embodiment is completed. By the execution of the initialization sequence, the transfer capacity between the integrated circuit-A 2101 and the integrated circuit-B 2111 is increased, the access for information fetching from the outside is prevented by encryption, and the integrated circuit-B 2111 can now access the integrated circuit-A 2101 as an initiator.

Continuously, a lane number change processing is explained. The main difference of the lane number change processing in the present embodiment and the lane number change processing in the first embodiment is whether the initiator function of the integrated circuit-B 2111 is stopped or not. In the first embodiment, since the integrated circuit-B 109 does not possess an initiator function of the serial interface, the lane number change processing can be started, by nullifying the outstanding number and prohibiting the transmission of an interruption packet, by the initiator of the integrated circuit-A 101. However, in the present embodiment, since the integrated circuit-B 2111 possesses an initiator function of the serial interface, it is a necessary condition that the initiator function is stopped before starting the lane number change processing.

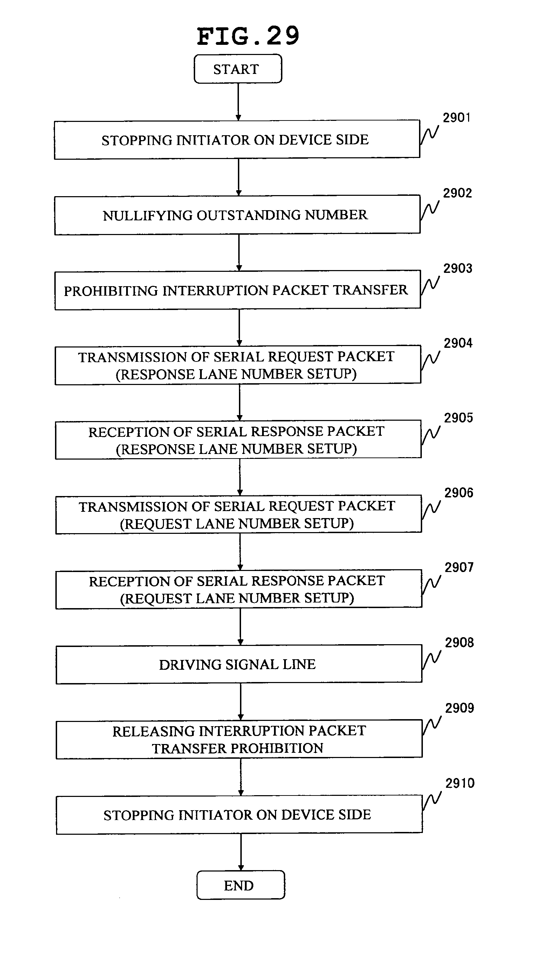

Hereafter, the lane number change processing in the present embodiment is explained with reference to FIG. 29.

FIG. 29 is a flow chart illustrating the processing of the lane number change sequence. The following explains the operation in which, in the present embodiment, the integrated circuit-A 2101 changes the down lane number to value 4 and the up lane number to value 2, in order to improve the processing performance in the write access by the integrated circuit-A 2101 and the processing performance in the read access by the integrated circuit-B 2111.

First, CPU-A 2102 stops the initiator function of the integrated circuit-B 2111 so that a serial request packet by the initiator of the integrated circuit-B 2111 may not be transmitted in the course of the execution of the lane number change sequence. For this reason, CPU-A 2102 writes value 1 to the initiator stop register-A of the register-A 2210, and transmits an initiator stop packet to the integrated circuit-B 2111. Upon receiving the initiator stop packet, the device-B 2116 of the integrated circuit-B 2111 performs the following operations: the integrated circuit-B 2111 prohibits the device-B 2116 from transmitting a new serial request packet; when a serial response packet not yet received exists to a serial request packet already transmitted, the integrated circuit-B 2111 stands by until the integrated circuit-B 2111 receives the present serial response packet; and when the reception of the serial response packet is completed, the integrated circuit-B 2111 transmits a serial response packet to the initiator stop packet. The processing described above is performed at Step S2901.

The description now returns to the explanation of the processing by the integrated circuit-A 2101. CPU-A 2102 carries out a write access to the down lane number register-B of the register-B 2406. In the present embodiment, another module which accesses the integrated circuit-B 2111 using the serial interface exists in addition to CPU-A 2102. Therefore, even if CPU-A 2102 nullifies the outstanding number of CPU-A 2102, there is no guarantee that the outstanding number to the integrated circuit-B 2111 of the controller-A 2106 is nullified. Therefore, not by the control of CPU-A 2102, but by the control of the controller-A 2106 serving as a subject, the lane number change processing is carried out.

The controller-A 2106 detects the present write access, stops a new serial request packet transmission until the controller-A 2106 receives all the serial response packets to the issued serial request packet, and nullifies the outstanding number of the controller-A 2106 to the integrated circuit-B 2111 (Step S2902).

Next, the controller-A 2106 writes "0" to the interruption transmission enabling register-B, and stops the interruption packet transmission by the integrated circuit-B 2111 (Step S2903). The controller-A 2106 transmits, to the integrated circuit-B 2111, a serial request packet for writing value 2 to the up lane number register of the integrated circuit-B 2111 (Step S2904).

The integrated circuit-B 2111 transmits a serial response packet to the present serial request packet, and stops the drive of two of the up lanes immediately after completing the transmission. The controller-A 2106 writes value 2 to the up lane number register-A, after the reception of the present serial response packet (Step S2905).

Next, the controller-A 2106 transmits, to the integrated circuit-B 2111, a serial request packet for writing value 4 to the down lane number register (Step S2906). The integrated circuit-B 2111 transmits a serial response packet to the present serial request packet. The controller-A 2106 writes value 4 to the down lane number register-A after the reception of the present serial response packet (Step S2907). The integrated circuit-A 2101 starts the drive of two signal lines which has been stopped by the integrated circuit-B 2111 at Step S2905, immediately after the value 4 has been written to the down lane number register-A (Step S2908). At the time of completion of Step S2908, the down lane number is "4", and the up lane number is "2." Accordingly, as compared with immediately after the completion of the initialization sequence, the write access by the integrated circuit-A 2101 and the read access by the integrated circuit-B 2111 can be processed at higher speed.

Continuously, the controller-A 2106 writes value 1 to the interruption transmission enabling register-B, and cancels the halt of interruption packet transfer from the integrated circuit-B 2111 to the integrated circuit-A 2101 (Step S2909).

Finally, the controller-A 2106 writes value 0 to the initiator stop register-A of the register-A 2210, and transmits an initiator stop canceling packet to the integrated circuit-B 2111 (Step S2910) .

The lane number change processing in the second embodiment is completed by the above. When changing the cryptographic key and the outstanding number, Step S2901 is carried out before the key change sequence or the outstanding change sequence, and Step S2910 is carried out after the key change sequence or the outstanding change sequence. Accordingly, even in the structure of the present embodiment in which plural initiators exist in the serial interface, it is possible to change the cryptographic key or the outstanding number.

In the end, the following explains interruption processing which is carried out by CPU-B 2112 mounted in the integrated circuit-B 2111, based on the interruption request which is generated by IP-A 2105 mounted in the integrated circuit-A 2101.

First, the interruption processing in the integrated circuit-A 2101 is explained. IP-A 2105 possesses an operation setting register built in. When a write access to the present operation setting register is received via the router-A 2107, the integrated circuit-A 2101 carries out the predetermined processing, asserts an interrupt request signal when the present processing is completed, notifies the controller-A 2106 of the completion of the processing, and stops operation until the integrated circuit-A 2101 receives a write access to the operation setting register again.

When IP-A 2105 asserts the interruption request signal, the interruption transmission controller-A 2203 of the controller-A 2106 generates an interruption packet, and transmits the interruption packet to the encryption transmitter-A 2204.

The encryption transmitter-A 2204 transmits the interruption packet to the integrated circuit-B 2111. At this time, the encryption transmitter-A 2204 transmits the interruption packet without encrypting it, regardless of the state of the encryption function enabling register-A. When the encryption transmitter-A 2204 has received an interruption packet from the interruption transmission controller-A 2203, a parallel request packet from the request transmission controller-A 2201, and a parallel response packet from the response transmission controller-A 2202, the encryption transmitter-A 2204 transmits the interruption packet first.

The reason why the encryption transmitter-A 2204 does not encrypt an interruption packet is for preventing the transfer of the interruption packet from being delayed, when the interruption request from IP-A 2105 occurs during the processing of the key change sequence. The encryption transmitter-A 2204 transmits an interruption packet earlier than a serial request packet or a serial response packet, in order to start the interruption processing of CPU-B 2112 quickly, by transferring the interruption packet to the integrated circuit-B 2111 quickly.

Next, the interruption processing of the integrated circuit-B 2111 is explained. The decryption receiver-B 2401 of the device-B 2116 receives a serial packet from the integrated circuit-A 2101, analyzes the present serial packet, specifies that the present packet is an interruption packet, and transmits the present interruption packet to the interruption reception controller-B 2403. The interruption reception controller-B 2403 analyzes the interruption packet received from the decryption receiver-B 2401, asserts an interrupt signal, and notifies the interruption to INTC-B 2114. At this time, the interruption reception controller-B 2403 generates interrupt level information, based on from bit 3 to bit 0 of the reqcc field of the interruption packet, generates interrupt code information, based on the intcode field of the interruption packet, and supplies both the interrupt level information and the interrupt code information to INTC-B 2114.

INTC-B 2114 asserts the interrupt signal and notifies to CPU-B 2112 that the interruption has occurred.

CPU-B 2112 accepts the interruption, executes an interruption processing program, interrupting the processing currently under execution, reads out the data generated by IP-A 2105 from the memory-A 2103 and stores it to the memory-B 2113, performs a write access to the operation setting register of IP-A 2105, via the router-B 2117, the device-B 2116, the controller-A 2106, and the router-A 2107, and restarts the operation.

By repeating the above interruption processing, it becomes possible to make IP-A 2105 of the integrated circuit-A 2101 perform the repetitive operation, by the control from the integrated circuit-B 2111.

According to the second embodiment described above, in the structure in which plural initiators are coupled to the serial interface, the effect described in the first embodiment can be realized similarly.

The invention accomplished by the present inventor has been concretely explained in the above based on the embodiments. It should be understood by those skilled in the art that various modifications, combinations, sub-combinations and alterations may occur depending on design requirements and other factors insofar as they are within the scope of the appended claims or the equivalents thereof.

## Claims

1. A data processing system comprising:
a first semiconductor integrated circuit comprising an initiator;
a second semiconductor integrated circuit comprising a target; and
an interface signal line coupling the initiator with the target,
wherein the initiator transmits a request packet to the target, and the target transmits a response packet to the initiator, accordingly a packet-based split transaction interface is executed,
wherein the initiator includes an outstanding number counting circuit operable to count an outstanding number defined as a difference in number between the transmitted request packet and the received response packet, and
wherein the initiator controls the number of the transmitted request packet so as to make the counted value of the outstanding number counting circuit not exceed an outstanding number that can be responded by the target.

2. The data processing system according to Claim 1,
wherein the target comprises an outstanding register operable to hold the outstanding number that can be responded, and
wherein the initiator reads out a value held by the outstanding register and controls the number of the transmitted request packet so as to make the read-out value not exceed the counted value of the outstanding number counting circuit.

3. The data processing system according to Claim 1,
wherein the target comprises an outstanding register operable to hold the outstanding number that can be responded, and
wherein the initiator sets an outstanding number to the outstanding register and controls the number of the transmitted request packet so as to make the outstanding number set not exceed the counted value of the outstanding number counting circuit.

4. The data processing system according to Claim 1,
wherein the initiator transmits an interruption packet to the target via a transfer path used in transmitting the request packet, and
wherein the target generates an interrupt signal based on the interruption packet received.

5. The data processing system according to Claim 1,
wherein the target transmits an interruption packet to the initiator via a packet transfer path used in transmitting the response packet, and
wherein the initiator generates an interrupt signal based on the interruption packet received.

6. The data processing system according to Claim 2,
wherein the target comprises a plurality of buffers operable to hold data of packets as many as a maximum outstanding number held in the outstanding register, and
wherein the target cuts off electric power supply to a buffer unneeded in holding the data of packets as many as the outstanding number held in the outstanding register.

7. The data processing system according to Claim 2,
wherein the target comprises a plurality of buffers operable to hold data of packets as many as a maximum outstanding number held in the outstanding register, and
wherein the target cuts off clock supply to a buffer unneeded in holding the data of packets as many as the outstanding number held in the outstanding register.

8. The data processing system according to Claim 1,
wherein the initiator supplies the target with a first cryptographic key to decrypt a request packet and a second cryptographic key to encrypt a response packet, and
wherein the target decrypts the received request packet with the first cryptographic key and encrypts the response packet to transmit with the second cryptographic key.

9. A data processing system comprising:
a first semiconductor integrated circuit comprising an initiator;
a second semiconductor integrated circuit comprising a target; and
an interface signal line coupling the initiator with the target,
wherein the initiator transmits a request packet to the target, and the target transmits a response packet to the initiator, accordingly a packet-based split transaction interface is executed,
wherein the initiator includes a read outstanding number counting circuit operable to count a read outstanding number defined as a difference in number between a request packet transmitted in read access and a response packet received in read access, and
wherein the initiator controls the number of the request packet transmitted in read access so as to make the counted value of the read outstanding number counting circuit not exceed an outstanding number that can be responded by the target.

10. A data processing system comprising:
a first semiconductor integrated circuit comprising an initiator;
a second semiconductor integrated circuit comprising a target; and
an interface signal line coupling the initiator with the target,
wherein the initiator transmits a request packet to the target, and the target transmits a response packet to the initiator, accordingly a packet-based split transaction interface is executed,
wherein the initiator includes a write outstanding number counting circuit operable to count a write outstanding number defined as a difference in number between a request packet transmitted in write access and a response packet received in write access, and
wherein the initiator controls the number of the request packet transmitted in write access so as to make the counted value of the write outstanding number counting circuit not exceed a write outstanding number that can be responded by the target.

11. A data processing system comprising:
a first semiconductor integrated circuit comprising an initiator;
a second semiconductor integrated circuit comprising a target; and
an interface signal line coupling the initiator with the target,
wherein the initiator transmits a request packet to the target, and the target transmits a response packet to the initiator, accordingly a packet-based split transaction interface is executed,
wherein the initiator transmits to the target a request packet and a request strobe signal indicative of transfer timing of the request packet, and
wherein the target transmits to the initiator a response packet and a response strobe signal indicative of transfer timing of the response packet.

12. A data processing system comprising:
a first semiconductor integrated circuit comprising an initiator;
a second semiconductor integrated circuit comprising a target; and
an interface signal line coupling the initiator with the target,
wherein the initiator transmits a request packet to the target, and the target transmits a response packet to the initiator, accordingly a packet-based split transaction interface is executed,
wherein the target includes:
a request lane number register operable to hold a number of signal lines used in receiving the request packet; and
a response lane number register operable to hold a number of signal lines used in transmitting the response packet, and
wherein the initiator sets respectively a value indicative of a number of signal lines used in transmitting the request packet to the request lane number register, and a value indicative of a number of signal lines used in receiving the response packet to the response lane number register.

13. The data processing system according to Claim 12,
wherein the initiator includes:
a request counting circuit operable to count a number of bits of the request packet; and
a response counting circuit operable to count a number of bits of the response packet,
wherein the initiator sets the number of signal lines used in transmitting the request packet and the number of signal lines used in receiving the response packet, based on the count result of the request counting circuit and the count result of the response counting circuit.

14. A data processing system comprising:
a first semiconductor integrated circuit; and
a second semiconductor integrated circuit,
wherein each of the first semiconductor integrated circuit and the second semiconductor integrated circuit comprising an initiator and a target operable to perform communication using a split transaction interface, and the first semiconductor integrated circuit and the second semiconductor integrated circuit are coupled with a signal line for communication, and
wherein the first semiconductor integrated circuit changes the number of the signal line after stopping the initiator of the second semiconductor integrated circuit.

15. A data processing system comprising:
a first semiconductor integrated circuit; and
a second semiconductor integrated circuit,
wherein each of the first semiconductor integrated circuit and the second semiconductor integrated circuit comprising an initiator and a target operable to perform communication of encrypted information using a split transaction interface, and the first semiconductor integrated circuit and the second semiconductor integrated circuit are coupled with a signal line for communication, and
wherein the first semiconductor integrated circuit changes a cryptographic key to be used in encryption after stopping the initiator of the second semiconductor integrated circuit.

16. A data processing system comprising:
a first semiconductor integrated circuit; and
a second semiconductor integrated circuit,
wherein each of the first semiconductor integrated circuit and the second semiconductor integrated circuit comprising an initiator and a target operable to perform communication using a split transaction interface, and the first semiconductor integrated circuit and the second semiconductor integrated circuit are coupled with a signal line for communication, and
wherein the first semiconductor integrated circuit sets an outstanding upper limit number of the initiator of the second semiconductor integrated circuit, based on an upper limit of the outstanding number of the target included in the first semiconductor integrated circuit.
